(19) Europäisches Patentamt
European Patent Office
Office européen des brevets

(11) EP 3 135 704 A1

# (12) EUROPÄISCHE PATENTANMELDUNG

(43) Veröffentlichungstag:
**01.03.2017 Patentblatt 2017/09**

(21) Anmeldenummer: **15182454.7**

(22) Anmeldetag: **26.08.2015**

(51) Int Cl.:
***C08G 59/24*** *(2006.01)*
***C08G 65/22*** *(2006.01)*
***H01G 11/48*** *(2013.01)*
***H01M 4/60*** *(2006.01)*
***C08G 61/08*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Evonik Degussa GmbH**
**45128 Essen (DE)**

(72) Erfinder:
- **SCHUBERT, Ulrich**
  **07743 Jena (DE)**
- **WILD, Andreas**
  **99423 Weimar (DE)**
- **HÄUPLER, Bernhard**
  **91052 Erlangen (DE)**

## (54) VERWENDUNG BESTIMMTER POLYMERE ALS LADUNGSSPEICHER

(57) Die vorliegende Erfindung betrifft Polymere sowie deren Verwendung in Form von aktivem Elektrodenmaterial oder in einem Elektrodenslurry als elektrische Ladungsspeicher, wobei die elektrischen Ladungsspeicher insbesondere Sekundärbatterien sind. Diese Sekundärbatterien zeichnen sich insbesondere durch hohe Zellspannungen, und hohe Kapazitäten nach Durchlaufen mehrerer Lade- und Entladezyklen, sowie einfache und skalierbare Verarbeitungs- und Herstellungsmethoden (zum Beispiel mittels Siebdruck) aus.

EP 3 135 704 A1

## Beschreibung

Die vorliegende Erfindung betrifft Polymere sowie deren Verwendung in Form von aktivem Elektrodenmaterial oder in einem Elektrodenslurry als elektrische Ladungsspeicher, wobei die elektrischen Ladungsspeicher insbesondere Sekundärbatterien sind. Diese Sekundärbatterien zeichnen sich insbesondere durch hohe Zellspannungen, einen geringen Kapazitätsabfall auch bei Durchlaufen mehrerer Lade- und Entladezyklen, große Leistungsdichten sowie einfache und skalierbare Verarbeitungs- und Herstellungsmethoden (zum Beispiel mittels Siebdruck) aus.

## Hintergrund der Erfindung

Organische Batterien sind elektrochemische Zellen, die ein organisches Ladungsspeicherungsmaterial als aktives Elektrodenmaterial zur Speicherung von elektrischer Ladung verwenden. Diese Sekundärbatterien zeichnen sich durch ihre besonderen Eigenschaften, wie Schnellladefähigkeit, hohe Lebensdauer, geringes Gewicht, hohe Flexibilität und einfache Verarbeitbarkeit aus. Als aktives Elektrodenmaterialien zur Ladungsspeicherung sind im Stand der Technik verschiedene polymere Strukturen beschrieben worden, so zum Beispiel polymere Verbindungen mit organischen Nitroxidradikalen als aktiven Einheiten (beispielsweise in WO 2012133202 A1, WO 2012133204 A1, WO 2012120929 A1, WO 2012153866 A1, WO 2012153865 A1, JP 2012-221574 A, JP 2012-221575 A , JP 2012-219109 A, JP 2012-079639 A, WO 2012029556 A1, WO 2012153865 A1, JP 2011-252106 A, JP 2011-074317 A, JP 2011-165433 A, WO 2011034117 A1, WO 2010140512 A1, WO 2010104002 A1, JP 2010-238403 A, JP 2010-163551 A, JP 2010-114042 A, WO 2010002002 A1, WO 2009038125 A1, JP 2009-298873 A, WO 2004077593 A1, WO 2009145225 A1, JP 2009-238612 A, JP 2009-230951 A, JP 2009-205918 A, JP 2008-234909 A, JP 2008-218326 A, WO 2008099557 A1, WO 2007141913 A1, US 20020041995 A1, EP 1128453 A2, A. Vlad, J. Rolland, G. Hauffman, B. Ernould, J.-F. Gohy, ChemSusChem 2015, 8, 1692 - 1696) oder polymere Verbindungen mit organischen Phenoxylradikalen oder Galvinoxylradikalen als aktiven Einheiten (zum Beispiel US 2002/0041995 A1, JP 2002-117852 A).

Auch polymere Verbindungen mit Chinonen (beispielsweise JP 2009-217992 A, WO 2013/099567 A1, WO 2011/068217 A1), mit Dionen (beispielsweise JP 2010-212152 A), sowie mit Dicyanodiiminen (beispielsweise JP 2012-190545 A, JP 2010-55923 A) als aktive Einheiten zur Ladungsspeicherung sind bekannt.
Auch Polymere, welche Dialkoxybenzol aufweisen, sind im Stand der Technik für eine Vielzahl verschiedener Anwendungen beschrieben. Dazu gehört ihre Anwendung als Epoxidharze zum Verschließen von Halbleitermodulen (zum Beispiel beschrieben in JP 2013098217 A, JP 2012224758 A, JP 2011231153 A, JP 2011138037 A, JP 2010282154 A, JP 2010266556 A, JP 2010077303 A, JP 2008296436 A oder WO 2004098745 A1). Weiterhin wurden dialkoxybenzolhaltige nicht-polymere Verbindungen als *"redox-shuttle"* Additive für Li-Ionen Batterien verwendet, um ein Überladen der Li-Batterie zu verhindern (WO 2011/149970 A2). Daneben wird auch die Verwendung bestimmter Polymere auf Basis von Dialkoxybenzolen als elektrische Ladungsspeicher beschrieben (P. Nesvadba, L. B. Folger, P. Maire, P. Novak, Synth. Met. 2011, 161, 259-262, im Folgenden abgekürzt als "Nesvadba *et al.*"; W. Weng, Z. C. Zhang, A. Abouimrane, P. C. Redfern, L. A. Curtiss, K. Amine, Adv. Funct. Mater. 2012, 22, 4485-4492, im Folgenden abgekürzt als "Weng *et al.*"). Diese von Nesvadba *et al.* und Weng *et al.* beschriebenen Polymere weisen jedoch mehrere Nachteile auf. Zwar besitzen diese ein Redoxpotential, welches über dem der häufig verwendeten Nitroxidradikale liegt und ermöglichen somit höhere Zellspannungen bei Verwendung der dialkoxybenzolhaltigen Polymere als Kathodenmaterial, allerdings zeigen Batterien, welche mit diese literaturbeschriebenen Polymeren hergestellt wurden einen schnellen Abfall der Entladekapazität nach Durchlaufen mehrerer Lade-/ Entladezyklen. Somit ist es wünschenswert und deshalb Aufgabe der Erfindung, Polymere zur Verfügung zu stellen, mit welchen die Kapazität nach Durchlaufen eines Lade-/ Entladezyklus nicht abfällt und somit nach Durchlaufen eines Lade- /Entladezyklus eine höhere Kapazität und somit höhere spezifische Energie erreicht werden kann. Somit ist es wünschenswert und deshalb Aufgabe der Erfindung, Polymere zur Verfügung zu stellen, mit welchen eine noch höhere Zellspannung und hohe, konstante Speicherkapazitäten nach Durchlaufen mehrerer Lade- /Entladezyklen erreicht werden können. Daneben ist der Syntheseaufwand ein weiteres Kriterium für die Einsetzbarkeit organischer Materialien als aktive Elektrodenmaterialien. Es war deshalb die weitere Aufgabe der vorliegenden Erfindung, möglichst einfach synthetisierbare Polymere zur Verfügung zu stellen.

## Detaillierte Beschreibung der Erfindung

Es wurden nun überraschend Polymere gefunden, welche die vorstellig genannten Aufgaben lösen. Die vorliegende Erfindung betrifft demnach ein Polymer umfassend $n^1$ miteinander verknüpfte Wiederholungseinheiten der chemischen Struktur **(I)** oder $n^2$ miteinander verknüpfte Wiederholungseinheiten der chemischen Struktur **(II)** mit

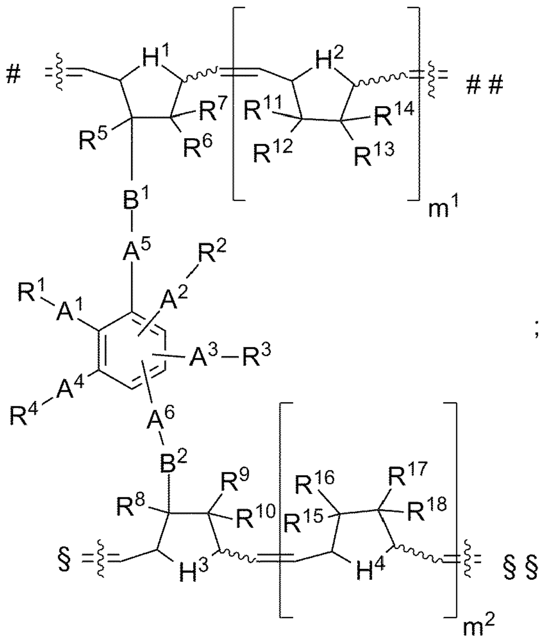

;

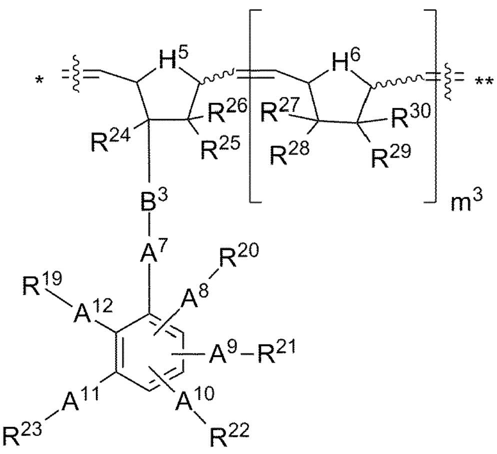

;

**(I)** **(II)**

wobei $n^1$ und $n^2$ unabhängig voneinander jeweils eine ganze Zahl ≥ 4 sind,
wobei $m^1$, $m^2$, $m^3$ unabhängig voneinander jeweils eine ganze Zahl ≥ 0 sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei $H^1$, $H^2$, $H^3$, $H^4$, $H^5$, $H^6$ unabhängig voneinander ausgewählt sind aus O, S, NR', CR"R"', insbesondere aus O, CR"R"',
wobei die Reste R', R", R"', $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{21}$, $R^{22}$, $R^{23}$, $R^{24}$, $R^{25}$, $R^{26}$, $R^{27}$ , $R^{28}$, $R^{29}$, $R^{30}$ unabhängig voneinander jeweils aus der Gruppe bestehend aus

Wasserstoff, (hetero)aromatischer Rest,
gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe,
Carbonsäureamidgruppe, Sulfonsäureestergruppe, Phosphorsäureester aufweisender aliphatischer Rest,

ausgewählt sind,
wobei mindestens zwei von $A^1$, $A^2$, $A^3$, $A^4$, $A^5$, $A^6$ jeweils für ein Sauerstoff- oder Schwefelatom stehen und die übrigen von $A^1$, $A^2$, $A^3$, $A^4$, $A^5$, $A^6$ jeweils für eine direkte Bindung stehen,
wobei mindestens zwei von $A^7$, $A^8$, $A^9$, $A^{10}$, $A^{11}$, $A^{12}$ jeweils für ein Sauerstoff- oder Schwefelatom stehen und die übrigen von $A^7$, $A^8$, $A^9$, $A^{10}$, $A^{11}$, $A^{12}$ jeweils für eine direkte Bindung stehen,
und wobei mindestens zwei in *ortho*-Stellung zueinander stehende Reste der Reste $R^1$, $R^2$, $R^3$, $R^4$ und/oder mindestens zwei in *ortho*-Stellung zueinander stehende Reste der Reste $R^{19}$, $R^{20}$, $R^{21}$, $R^{22}$, $R^{23}$ jeweils auch durch mindestens einen (hetero)aromatischen Ring oder gegebenenfalls mit mindestens einer Gruppe ausgewählt aus Nitrogruppe, $-NH_2$, -CN, -SH, -OH, Halogen, Alkylgruppe substituierten und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe,

Phosphorsäureester aufweisenden aliphatischen Ring verbrückt sein können,
und wobei der Rest $R^1$ im Falle dass $A^1$ = direkte Bindung, der Rest $R^2$ im Falle dass $A^2$ = direkte Bindung, der Rest $R^3$ im Falle dass $A^3$ = direkte Bindung, der Rest $R^4$ im Falle dass $A^4$ = direkte Bindung, der Rest $R^{19}$ im Falle dass $A^{12}$ = direkte Bindung, der Rest $R^{20}$ im Falle dass $A^8$ = direkte Bindung, der Rest $R^{21}$ im Falle dass $A^9$ = direkte Bindung, der Rest $R^{22}$ im Falle dass $A^{10}$ = direkte Bindung, der Rest $R^{23}$ im Falle dass $A^{11}$ = direkte Bindung sowie die Reste R", R"', $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{24}$, $R^{25}$, $R^{26}$, $R^{27}$, $R^{28}$, $R^{29}$, $R^{30}$ jeweils auch aus der Gruppe bestehend aus

Nitrogruppe, -CN, -F, -Cl, -Br, -I, -$COOR^{36}$, -C(=O)$NHR^{37}$, -$NR^{38}R^{39}$, wobei $R^{36}$, $R^{37}$, $R^{38}$, $R^{39}$ unabhängig voneinander jeweils ausgewählt aus der Gruppe bestehend aus Wasserstoff, (hetero)aromatischer Rest, gegebenenfalls mit mindestens einer Gruppe ausgewählt aus Nitrogruppe, -$NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest,

ausgewählt sein können,
und wobei die Reste R"', $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{24}$, $R^{25}$, $R^{26}$, $R^{27}$, $R^{28}$, $R^{29}$, $R^{30}$ unabhängig voneinander auch ein Rest der Formel -O-$R^{40}$, wobei $R^{40}$ ein gegebenenfalls mit mindestens einer Gruppe ausgewählt aus Nitrogruppe, -$NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest ist, sein können,
wobei $B^1$ im Falle dass $A^5$ = O oder S, $B^2$ im Falle dass $A^6$ = O oder S, $B^3$ im Falle dass $A^7$ = O oder S unabhängig voneinander aus der Gruppe bestehend aus

direkte Bindung,

$$\&\text{-}(X^1)_{p1}\text{-}[C{=}X^2]_{p2}\text{-}(X^3)_{p3}\text{-}B^5\text{-}(Y^2)_{q2}\text{-}[C{=}Y^1]_{q1}\text{-}\&\&,$$

$$\&\text{-}(Y^3)_{q3}\text{-}(C{=}Y^4)\text{-}\&\&,$$

ausgewählt sind,
und wobei $B^1$ im Falle dass $A^5$ = direkte Bindung, $B^2$ im Falle dass $A^6$ = direkte Bindung, $B^3$ im Falle dass $A^7$ = direkte Bindung unabhängig voneinander aus der Gruppe bestehend aus

$$\&\text{-}(X^4)_{p4}\text{-}[C{=}X^5]_{p5}\text{-}(X^6)_{p6}\text{-}B^6\text{-}(Y^7)_{q6}\text{-}[C{=}Y^6]_{q5}\text{-}(Y^5)_{q4}\text{-}\&\&,$$

$$\&\text{-}(Y^{10})_{q9}\text{-}(C{=}Y^9)_{q8}\text{ -}(Y^8)_{q7}\text{-}\&\&,$$

wobei p1, p2, p3 jeweils 0 oder 1 mit der Maßgabe, dass nicht gleichzeitig p1 = p3 = 1 und p2 = 0 ist, sind,
wobei p4, p5, p6 jeweils 0 oder 1 mit der Maßgabe, dass nicht gleichzeitig p4 = p6 = 1 und p5 = 0 ist, sind,
wobei q1, q2 jeweils 0 oder 1 sind, wobei wenn q1 = 0, dann q2 = 0,
wobei q3 = 0 oder 1 ist,
wobei q4, q5, q6 jeweils 0 oder 1 mit der Maßgabe, dass nicht gleichzeitig q4 = q6 = 1 und q5 = 0 ist, sind,
wobei q7, q8, q9 jeweils 0 oder 1 mit der Maßgabe, dass nicht gleichzeitig q7 = q9 = 1 und q8 = 0 ist, und dass wenn q7 = 1 und q8 = 0, dann q9 = 0 ist,

wobei $X^2$, $X^5$, $Y^1$, $Y^4$, $Y^6$, $Y^9$ unabhängig voneinander ausgewählt aus der Gruppe bestehend aus Sauerstoff, Schwefel sind,
wobei $X^1$, $X^3$, $X^4$, $X^6$, $Y^2$, $Y^3$, $Y^7$, $Y^{10}$ unabhängig voneinander ausgewählt aus der Gruppe bestehend aus O, S, NH, N-Alkyl sind,

wobei $Y^5$, $Y^8$ aus NH, N-Alkyl ausgewählt ist,

wobei $B^5$, $B^6$ unabhängig voneinander ausgewählt aus der Gruppe bestehend aus zweiwertiger (hetero)aromatischer Rest,

zweiwertiger, gegebenenfalls mit mindestens einer Gruppe ausgewählt aus Nitrogruppe,-$NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest sind,

ausgewählt sind,
und wobei "&&" für $B^1$ die zu $A^5$ weisende Bindung bezeichnet, für $B^2$ die zu $A^6$ weisende Bindung bezeichnet, für $B^3$ die zu $A^7$ weisende Bindung bezeichnet,
und wobei "&" für $B^1$ die zu $R^5$ weisende Bindung bezeichnet, für $B^2$ die zu $R^8$ weisende Bindung bezeichnet, für $B^3$ die zu $R^{24}$ weisende Bindung bezeichnet.

Das erfindungsgemäße Polymer nach Punkt 1 kann dabei insbesondere $n^1$ miteinander verknüpfte Wiederholungseinheiten der chemischen Struktur **(I)** mit den vorstehend angegebenen Bedeutungen von $R^1$ bis $R^{18}$, $A^1$ bis $A^6$, $B^1$, $B^2$, $H^1$ bis $H^4$, $m^1$, $m^2$ umfassen.
Das erfindungsgemäße Polymer nach Punkt 1 kann dabei alternativ insbesondere $n^2$ miteinander verknüpfte Wiederholungseinheiten der chemischen Struktur **(II)** mit den vorstehend angegebenen Bedeutungen von $R^{19}$ bis $R^{30}$, $A^7$ bis $A^{12}$, $B^3$, $H^5$, $H^6$, $m^3$ umfassen.

2. Insbesondere betrifft die vorliegende Erfindung ein Polymer umfassend $n^1$ miteinander verknüpfte Wiederholungseinheiten der chemischen Struktur (I) oder $n^2$ miteinander verknüpfte Wiederholungseinheiten der chemischen Struktur **(II)** mit

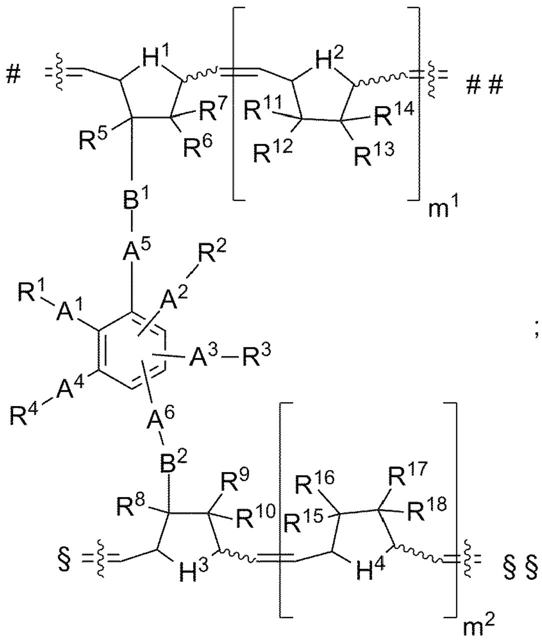

**(I)**

;

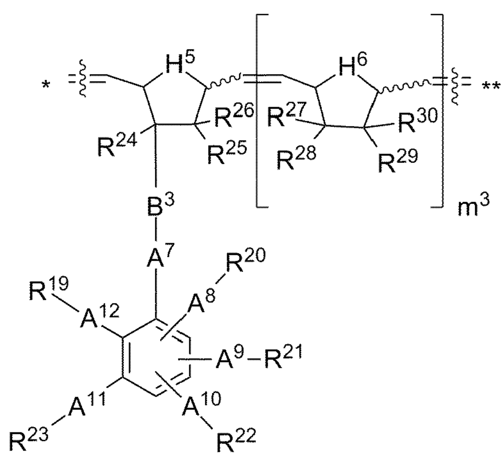

**(II)**

;

wobei $n^1$ und $n^2$ unabhängig voneinander jeweils eine ganze Zahl $\geq 4$, insbesondere $\geq 4$ und $\leq 5000$, sind,
wobei $m^1$, $m^2$, $m^3$ unabhängig voneinander jeweils eine ganze Zahl $\geq 0$, insbesondere $\geq 0$ und $\leq 5000$, sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten

Bindung der benachbarten Wiederholungseinheit verknüpft ist, wobei $H^1$, $H^2$, $H^3$, $H^4$, $H^5$, $H^6$ unabhängig voneinander ausgewählt sind aus O, CR"R"', insbesondere aus O, $CH_2$, wobei die Reste R", R"', $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{21}$, $R^{22}$, $R^{23}$, $R^{24}$, $R^{25}$, $R^{26}$, $R^{27}$, $R^{28}$, $R^{29}$, $R^{30}$ unabhängig voneinander jeweils aus der Gruppe bestehend aus

Wasserstoff, Phenyl, Benzyl, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest, und insbesondere aus der Gruppe bestehend aus Wasserstoff, Alkylgruppe mit 1 bis 30 Kohlenstoffatomen,

ausgewählt sind, und wobei die Reste $R^{11}$, $R^{13}$, $R^{15}$, $R^{17}$ unabhängig voneinander jeweils auch eine Gruppe der allgemeinen Struktur **(III)** mit

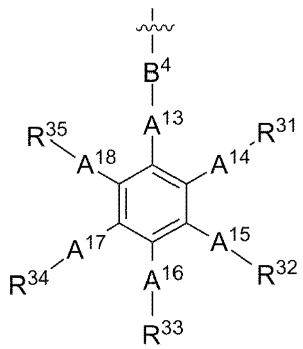

;

**(III)**

worin die Reste $R^{31}$, $R^{32}$, $R^{33}$, $R^{34}$, $R^{35}$ unabhängig voneinander die für $R^1$ angegebene Bedeutung haben und insbesondere unabhängig voneinander jeweils eine Alkylgruppe mit 1 bis 30 Kohlenstoffatomen, sein können, wobei mindestens, insbesondere genau, zwei von $A^1$, $A^2$, $A^3$, $A^4$, $A^5$, $A^6$ jeweils für ein Sauerstoff- oder Schwefelatom, insbesondere ein Sauerstoffatom, stehen und die übrigen von $A^1$, $A^2$, $A^3$, $A^4$, $A^5$, $A^6$ jeweils für eine direkte Bindung stehen, wobei mindestens, insbesondere genau, zwei von $A^7$, $A^8$, $A^9$, $A^{10}$, $A^{11}$, $A^{12}$ jeweils für ein Sauerstoff- oder Schwefelatom, insbesondere ein Sauerstoffatom, stehen und die übrigen von $A^7$, $A^8$, $A^9$, $A^{10}$, $A^{11}$, $A^{12}$ jeweils für eine direkte Bindung stehen, wobei mindestens, insbesondere genau, zwei von $A^{13}$, $A^{14}$, $A^{15}$, $A^{16}$, $A^{17}$, $A^{18}$ jeweils für ein Sauerstoff- oder Schwefelatom, insbesondere ein Sauerstoffatom, stehen und die übrigen von $A^{13}$, $A^{14}$, $A^{15}$, $A^{16}$, $A^{17}$, $A^{18}$ jeweils für eine direkte Bindung stehen, und wobei mindestens zwei in *ortho*-Stellung zueinander stehende Reste der Reste $R^1$, $R^2$, $R^3$, $R^4$ und/oder mindestens zwei in *ortho*-Stellung zueinander stehende Reste der Reste $R^{19}$, $R^{20}$, $R^{21}$, $R^{22}$, $R^{23}$ und/oder mindestens zwei in *ortho*-Stellung zueinander stehende Reste der Reste $R^{31}$, $R^{32}$, $R^{33}$, $R^{34}$, $R^{35}$ jeweils auch durch mindestens einen (hetero)aromatischen Ring oder gegebenenfalls mit mindestens einer Gruppe ausgewählt aus Nitrogruppe, $-NH_2$, -CN, -SH, -OH, Halogen, Alkylgruppe substituierten und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisenden aliphatischen Ring verbrückt sein können, und wobei der Rest $R^1$ im Falle dass $A^1$ = direkte Bindung, der Rest $R^2$ im Falle dass $A^2$ = direkte Bindung, der Rest $R^3$ im Falle dass $A^3$ = direkte Bindung, der Rest $R^4$ im Falle dass $A^4$ = direkte Bindung, der Rest $R^{19}$ im Falle dass $A^{12}$ = direkte Bindung, der Rest $R^{20}$ im Falle dass $A^8$ = direkte Bindung, der Rest $R^{21}$ im Falle dass $A^9$ = direkte Bindung, der Rest $R^{22}$ im Falle dass $A^{10}$ = direkte Bindung, der Rest $R^{23}$ im Falle dass $A^{11}$ = direkte Bindung, der Rest $R^{31}$ im Falle dass $A^{14}$ = direkte Bindung, der Rest $R^{32}$ im Falle dass $A^{15}$ = direkte Bindung, der Rest $R^{33}$, im Falle dass $A^{16}$ = direkte Bindung, der Rest $R^{34}$ im Falle dass $A^{17}$ = direkte Bindung, der Rest $R^{35}$ im Falle dass $A^{18}$ = direkte Bindung sowie die Reste R", R"', $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{24}$, $R^{25}$, $R^{26}$, $R^{27}$ , $R^{28}$, $R^{29}$, $R^{30}$ jeweils auch aus der Gruppe bestehend aus

Nitrogruppe, -CN, -F, -Cl, -Br, -I, $-COOR^{36}$, $-C(=O)NHR^{37}$, $-NR^{38}R^{39}$, wobei $R^{36}$, $R^{37}$, $R^{38}$, $R^{39}$ unabhängig vonein-

ander jeweils ausgewählt aus der Gruppe bestehend aus Wasserstoff, (hetero)aromatischer Rest, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest ist,

ausgewählt sein können,
und wobei die Reste R''', $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{24}$, $R^{25}$, $R^{26}$, $R^{27}$, $R^{28}$, $R^{29}$, $R^{30}$ unabhängig voneinander auch ein Rest der Formel $-O-R^{40}$, wobei $R^{40}$ ein gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest ist, sein können,
wobei $B^1$ im Falle dass $A^5$ = O oder S, $B^2$ im Falle dass $A^6$ = O oder S, $B^3$ im Falle dass $A^7$ = O oder S, $B^4$ im Falle dass $A^{13}$ = O oder S unabhängig voneinander aus der Gruppe bestehend aus

direkte Bindung,

$$\&-(X^1)_{p1}-[C=X^2]_{p2}-(X^3)_{p3}-B^5-(Y^2)_{q2}-[C=Y^1]_{q1}-\&\&,$$

$$\&-(Y^3)_{q3}-(C=Y^4)-\&\&,$$

ausgewählt sind,
und wobei $B^1$ im Falle dass $A^5$ = direkte Bindung, $B^2$ im Falle dass $A^6$ = direkte Bindung, $B^3$ im Falle dass $A^7$ = direkte Bindung, $B^4$ im Falle dass $A^{13}$ = direkte Bindung unabhängig voneinander aus der Gruppe bestehend aus

$$\&-(X^4)_{p4}-[C=X^5]_{p5}-(X^6)_{p6}-B^6-(Y^7)_{q6}-[C=Y^6]_{q5}-(Y^5)_{q4}-\&\&,$$

$$\&-(Y^{10})_{q9}-(C=Y^9)_{q8}-(Y^8)_{q7}-\&\&,$$

wobei p1, p2, p3 jeweils 0 oder 1 mit der Maßgabe, dass nicht gleichzeitig p1 = p3 = 1 und p2 = 0 ist, sind,
wobei p4, p5, p6 jeweils 0 oder 1 mit der Maßgabe, dass nicht gleichzeitig p4 = p6 = 1 und p5 = 0 ist, sind,
wobei q1, q2 jeweils 0 oder 1 sind, wobei wenn q1 = 0, dann q2 = 0,
wobei q3 = 0 oder 1 ist,
wobei q4, q5, q6 jeweils 0 oder 1 mit der Maßgabe, dass nicht gleichzeitig q4 = q6 = 1 und q5 = 0 ist, sind,
wobei q7, q8, q9 jeweils 0 oder 1 mit der Maßgabe, dass nicht gleichzeitig q7 = q9 = 1 und q8 = 0 ist, und dass wenn q7 = 1 und q8 = 0, dann q9 = 0 ist,
wobei $X^2$, $X^5$, $Y^1$, $Y^4$, $Y^6$, $Y^9$ unabhängig voneinander ausgewählt aus der Gruppe bestehend aus Sauerstoff, Schwefel sind,
wobei $X^1$, $X^3$, $X^4$, $X^6$, $Y^2$, $Y^3$, $Y^7$, $Y^{10}$ unabhängig voneinander ausgewählt aus der Gruppe bestehend aus O, S, NH, N-Alkyl, wobei die Alkylgruppe insbesondere 1 bis 10 Kohlenstoffatome aufweist, sind,

wobei $Y^5$, $Y^8$ aus NH, N-Alkyl, wobei die Alkylgruppe insbesondere 1 bis 10 Kohlenstoffatome aufweist, ausgewählt ist,

wobei $B^5$, $B^6$ unabhängig voneinander ausgewählt aus der Gruppe bestehend aus zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest,

und insbesondere ein zweiwertiger, gegebenenfalls mindestens eine Gruppe ausgewählt aus Ether, Thioether, Aminoether aufweisender aliphatischer Rest sind,

ausgewählt sind,
und wobei "&&" für $B^1$ die zu $A^5$ weisende Bindung bezeichnet, für $B^2$ die zu $A^6$ weisende Bindung bezeichnet, für $B^3$ die zu $A^7$ weisende Bindung bezeichnet, für $B^4$ die zu $A^{13}$ weisende Bindung bezeichnet,
und wobei "&" für $B^1$ die zu $R^5$ weisende Bindung bezeichnet, für $B^2$ die zu $R^8$ weisende Bindung bezeichnet, für $B^3$ die zu $R^{24}$ weisende Bindung bezeichnet, für $B^4$ die zu $R^{12}$, bzw. $R^{14}$ bzw. $R^{16}$ bzw. $R^{18}$ weisende Bindung bezeichnet.

Das erfindungsgemäße Polymer nach Punkt 2 kann dabei insbesondere $n^1$ miteinander verknüpfte Wiederholungseinheiten der chemischen Struktur **(I)** mit den vorstehend angegebenen Bedeutungen von $R^1$ bis $R^{18}$, $A^1$ bis $A^6$, $B^1$, $B^2$, $H^1$ bis $H^4$, $m^1$, $m^2$ umfassen.
Das erfindungsgemäße Polymer nach Punkt 2 kann dabei alternativ insbesondere $n^2$ miteinander verknüpfte Wiederholungseinheiten der chemischen Struktur **(II)** mit den vorstehend angegebenen Bedeutungen von $R^{19}$ bis $R^{30}$, $A^7$ bis $A^{12}$, $B^3$, $H^5$, $H^6$, $m^3$ umfassen.

3. In einer bevorzugten Ausführungsform betrifft die vorliegende Erfindung ein Polymer umfassend $n^1$ miteinander verknüpfte Wiederholungseinheiten der chemischen Struktur **(I)** oder $n^2$ miteinander verknüpfte Wiederholungseinheiten der chemischen Struktur **(II)** mit

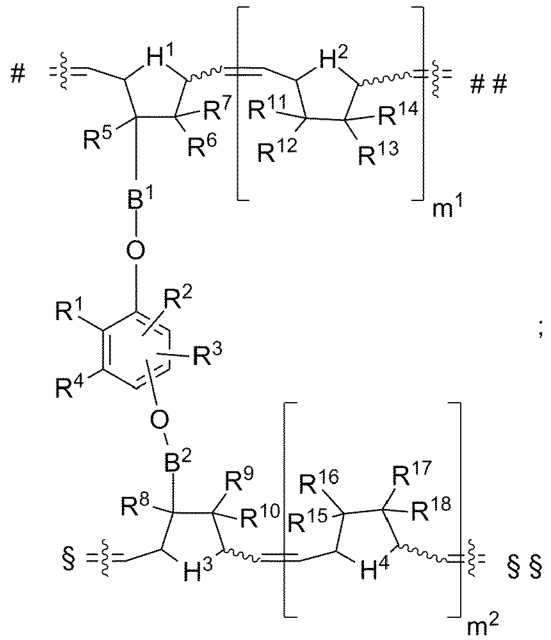
;
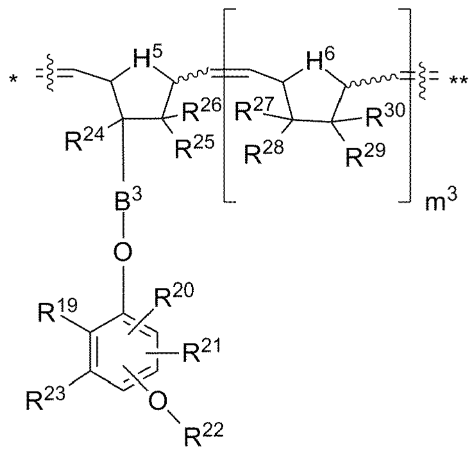
;

**(I)** **(II)**

wobei $n^1$ und $n^2$ unabhängig voneinander jeweils eine ganze Zahl $\geq 4$ und $\leq 5000$, insbesondere $\geq 10$ und $\leq 1000$, sind,
wobei $m^1$, $m^2$, $m^3$ unabhängig voneinander jeweils eine ganze Zahl $\geq 0$ und $\leq 5000$, insbesondere $\geq 0$ und $\leq 1000$, sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei $H^1$, $H^2$, $H^3$, $H^4$, $H^5$, $H^6$ unabhängig voneinander ausgewählt sind aus O, $CH_2$, insbesondere jeweils $CH_2$ sind,
wobei die Reste $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{21}$, $R^{23}$, $R^{24}$, $R^{25}$, $R^{26}$, $R^{27}$ , $R^{28}$, $R^{29}$, $R^{30}$ unabhängig voneinander jeweils aus der Gruppe bestehend aus

Wasserstoff, Alkylgruppe mit 1 bis 30, insbesondere 1 bis 8, Kohlenstoffatomen,

ausgewählt sind,
und wobei $R^{22}$ eine Alkylgruppe mit 1 bis 30, insbesondere 1 bis 8, Kohlenstoffatomen ist,
und wobei die Reste $R^{11}$, $R^{13}$, $R^{15}$, $R^{17}$ unabhängig voneinander jeweils auch eine Gruppe der allgemeinen Struktur **(III)** mit

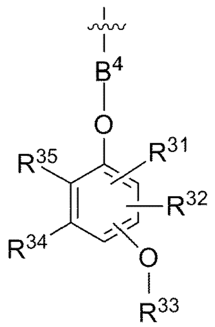 ;

**(III)**

wobei die Reste $R^{31}$, $R^{32}$, $R^{34}$, $R^{35}$ unabhängig voneinander jeweils aus der Gruppe bestehend aus Wasserstoff, Alkylgruppe mit 1 bis 30, insbesondere 1 bis 8, Kohlenstoffatomen, ausgewählt sind,
und wobei $R^{33}$, eine Alkylgruppe mit 1 bis 30, insbesondere 1 bis 8, Kohlenstoffatomen ist,

sein können,
und wobei $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{24}$, $R^{25}$, $R^{26}$, $R^{27}$, $R^{28}$, $R^{29}$, $R^{30}$ jeweils auch aus der Gruppe bestehend aus

Nitrogruppe, -CN, -F, -Cl, -Br, -I, -O-$R^{40}$, wobei $R^{40}$ eine Alkylgruppe mit 1 bis 30, insbesondere 1 bis 8, Kohlenstoffatomen ist,

ausgewählt sein können,
wobei $B^1$, $B^2$, $B^3$, $B^4$ unabhängig voneinander aus der Gruppe bestehend aus

direkte Bindung,

$$\&\text{-}(X^1)_{p1}\text{-}[C{=}X^2]_{p2}\text{-}(X^3)_{p3}\text{-}B^5\text{-}(Y^2)_{q2}\text{-}[C{=}Y^1]_{q1}\text{-}\&\&,$$

$$\&\text{-}(Y^3)_{q3}\text{-}(C{=}Y^4)\text{ -}\&\&,$$

insbesondere aus der Gruppe bestehend aus

direkte Bindung,

$$\&\text{-}(O)_{p1}\text{-}[C{=}O]_{p2}\text{-}(O)_{p3}\text{-}B^5\text{-}\&\&,$$

ausgewählt sind,

wobei p1, p2, p3 jeweils 0 oder 1 mit der Maßgabe, dass nicht gleichzeitig p1 = p3 = 1 und p2 = 0 ist, sind,
wobei q1, q2 jeweils 0 oder 1 sind, wobei wenn q1 = 0, dann q2 = 0,
wobei q3 = 0 oder 1 ist,

wobei $X^2$, $Y^1$, $Y^4$ unabhängig voneinander ausgewählt aus der Gruppe bestehend aus Sauerstoff, Schwefel und insbesondere $X^2 = Y^1 = Y^4 = O$ sind,

wobei $X^1$, $X^3$, $Y^2$, $Y^3$ unabhängig voneinander ausgewählt aus der Gruppe bestehend aus O, S und insbesondere $X^1 = X^3 = Y^2 = Y^3 = O$ sind,

und wobei $B^5$ ausgewählt aus der Gruppe bestehend aus &-Phenylen-$CH_2$-&&, ein zweiwertiger, gegebenenfalls mindestens eine Gruppe ausgewählt aus Ether, Thioether, Aminoether aufweisender aliphatischer Rest ist, insbesondere eine Alkylengruppe mit noch bevorzugter 1 bis 30 Kohlenstoffatomen ist,

und wobei "&&" für $B^1$ die zu $A^5$ = Sauerstoff weisende Bindung bezeichnet, für $B^2$ die zu $A^6$ = Sauerstoff weisende Bindung bezeichnet, für $B^3$ die zu $A^7$ = Sauerstoff weisende Bindung bezeichnet, für $B^4$ die zu $A^{13}$ = Sauerstoff weisende Bindung bezeichnet,
und wobei "&" für $B^1$ die zu $R^5$ weisende Bindung bezeichnet, für $B^2$ die zu $R^8$ weisende Bindung bezeichnet, für $B^3$ die zu $R^{24}$ weisende Bindung bezeichnet, für $B^4$ die zu $R^{12}$, bzw. $R^{14}$ bzw. $R^{16}$ bzw. $R^{18}$ weisende Bindung bezeichnet.

Das erfindungsgemäße Polymer nach Punkt 3 kann dabei insbesondere $n^1$ miteinander verknüpfte Wiederholungseinheiten der chemischen Struktur **(I)** mit den vorstehend angegebenen Bedeutungen von $R^1$ bis $R^{18}$, $B^1$, $B^2$, $m^1$, $m^2$ umfassen.
Das erfindungsgemäße Polymer nach Punkt 1 kann dabei alternativ insbesondere $n^2$ miteinander verknüpfte Wiederholungseinheiten der chemischen Struktur **(II)** mit den vorstehend angegebenen Bedeutungen von $R^{19}$ bis $R^{30}$, $B^3$, $m^3$ umfassen.

4. In einer bevorzugteren Ausführungsform betrifft die vorliegende Erfindung ein Polymer umfassend $n^1$ miteinander verknüpfte Wiederholungseinheiten der chemischen Struktur **(I)** oder $n^2$ miteinander verknüpfte Wiederholungseinheiten der chemischen Struktur **(II)** mit

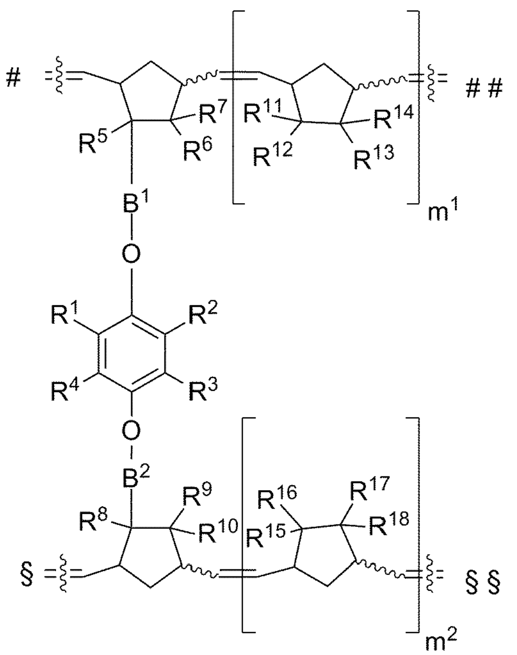

;

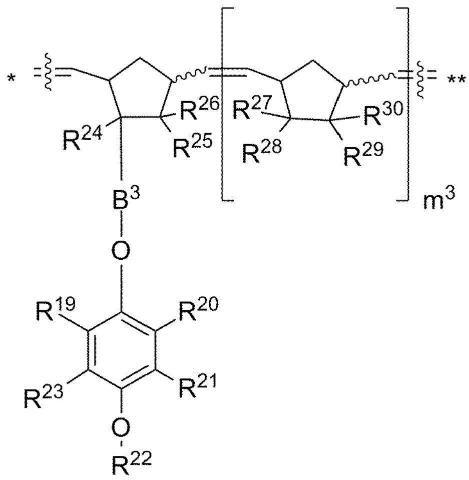

;

**(I)** **(II)**

wobei $n^1$ und $n^2$ unabhängig voneinander jeweils eine ganze Zahl $\geq 10$ und $\leq 1000$, sind,
wobei $m^1$, $m^2$, $m^3$ unabhängig voneinander jeweils eine ganze Zahl $\geq 0$ und $\leq 1000$, sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind,

dass die durch "*" gekennzeichnete Bindung einer bestimmten Wiederholungseinheit mit der durch "**" gekennzeichneten Bindung der benachbarten Wiederholungseinheit verknüpft ist,
wobei die Reste $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{21}$, $R^{23}$, $R^{24}$, $R^{25}$, $R^{26}$, $R^{27}$ , $R^{28}$, $R^{29}$, $R^{30}$ unabhängig voneinander jeweils aus der Gruppe bestehend aus Wasserstoff, Alkylgruppe mit 1 bis 8 Kohlenstoffatomen ausgewählt sind,
und wobei $R^{22}$ eine Alkylgruppe mit 1 bis 8 Kohlenstoffatomen ist,
und wobei die Reste $R^{11}$, $R^{13}$, $R^{15}$, $R^{17}$ unabhängig voneinander jeweils auch eine Gruppe der allgemeinen Struktur **(III)** mit

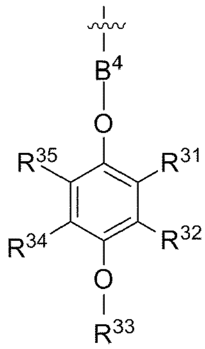
;

**(III)**

wobei die Reste $R^{31}$, $R^{32}$, $R^{34}$, $R^{35}$ unabhängig voneinander jeweils aus der Gruppe bestehend aus Wasserstoff, Alkylgruppe mit 1 bis 8 Kohlenstoffatomen ausgewählt sind,
und wobei $R^{33}$, eine Alkylgruppe mit 1 bis 8 Kohlenstoffatomen ist,
sein können,
und wobei $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{24}$, $R^{25}$, $R^{26}$, $R^{27}$, $R^{28}$, $R^{29}$, $R^{30}$ jeweils auch aus der Gruppe bestehend aus

Nitrogruppe, -CN, -F, -Cl, -Br, -I, -O-$R^{40}$, wobei $R^{40}$ eine Alkylgruppe mit 1 bis 8 Kohlenstoffatomen ist,

ausgewählt sein können,
wobei $B^1$, $B^2$, $B^3$, $B^4$ unabhängig voneinander aus der Gruppe bestehend aus

direkte Bindung,

$$\&\text{-}(O)_{p1}\text{-}[C{=}O]_{p2}\text{-}(O)_{p3}\text{-}B^5\text{-}\&\&,$$

ausgewählt sind,

wobei p1, p2, p3 jeweils 0 oder 1 mit der Maßgabe, dass nicht gleichzeitig p1 = p3 = 1 und p2 = 0 ist, sind,

$B^5$ = Alkylengruppe mit 1 bis 30 Kohlenstoffatomen ist, noch bevorzugter ist p1 = 1, p2 = p3 = 0 und $B^5$ = Alkylengruppe mit 1 bis 10 Kohlenstoffatomen,

und wobei "&&" für $B^1$ die zu $A^5$ = Sauerstoff weisende Bindung bezeichnet, für $B^2$ die zu $A^6$ = Sauerstoff weisende Bindung bezeichnet, für $B^3$ die zu $A^7$ = Sauerstoff weisende Bindung bezeichnet, für $B^4$ die zu $A^{13}$ = Sauerstoff weisende Bindung bezeichnet,
und wobei "&" für $B^1$ die zu $R^5$ weisende Bindung bezeichnet, für $B^2$ die zu $R^8$ weisende Bindung bezeichnet, für $B^3$ die zu $R^{24}$ weisende Bindung bezeichnet, für $B^4$ die zu $R^{12}$, bzw. $R^{14}$ bzw. $R^{16}$ bzw. $R^{18}$ weisende Bindung bezeichnet.
Das erfindungsgemäße Polymer gemäß Punkt 4 kann dabei insbesondere $n^1$ miteinander verknüpfte Wiederholungseinheiten der chemischen Struktur **(I)** mit den für die bevorzugtere Ausführungsform angegebenen Bedeutungen von $R^1$ bis $R^{18}$, $B^1$, $B^2$, $B^4$, $m^1$, $m^2$ umfassen.
Das erfindungsgemäße Polymer gemäß Punkt 4 kann dabei alternativ insbesondere $n^2$ miteinander verknüpfte Wieder-

holungseinheiten der chemischen Struktur **(II)** mit den für die bevorzugtere Ausführungsform angegebenen Bedeutungen von $R^{19}$ bis $R^{30}$, $B^3$, $m^3$ umfassen.

Noch bevorzugter sind im erfindungsgemäßen Polymer nach Punkt 4 $R^1 = R^3$, $R^2 = R^4$, $R^{19} = R^{21}$, $R^{20} = R^{23}$, $R^{31} = R^{34}$, $R^{32} = R^{35}$, und $B^1$, $B^2$, $B^3$, $B^4$ unabhängig voneinander jeweils aus der Gruppe bestehend aus direkte Bindung, &-[(C=O)-O-]$_r$-$B^5$-&&, wobei r = 0 oder 1, bevorzugt r = 1,
$B^5$ = Methylen, Ethylen, *n*-Propylen, *n*-Butylen, *n*-Pentylen, *n*-Hexylen oder Phenylen ist, ausgewählt sind, wobei "&&" und "&" die oben angegebenen Bedeutungen haben, wobei insbesondere $R^5$ bis $R^{18}$ und $R^{24}$ bis $R^{30}$ unabhängig voneinander Alkyl mit 1 bis 6 Kohlenstoffatomen oder H, bevorzugt $R^5$ bis $R^{18}$ und $R^{24}$ bis $R^{30}$ jeweils H sind.

Noch mehr bevorzugter sind $R^1 = R^3$ = H, $R^2 = R^4$ = Alkylgruppe mit 1 bis 8, insbesondere 1 bis 6, Kohlenstoffatomen, $R^{19} = R^{21}$ = H, $R^{20} = R^{23}$ = Alkylgruppe mit 1 bis 8, insbesondere 1 bis 6, Kohlenstoffatomen, $R^{31} = R^{34}$ = H, $R^{32} = R^{35}$ = Alkylgruppe mit 1 bis 8, insbesondere 1 bis 6, Kohlenstoffatomen, und $B^1$, $B^2$, $B^3$, $B^4$ unabhängig voneinander jeweils aus der Gruppe bestehend aus &-[O-(C=O)]$_r$-$B^5$-&& wobei $B^5$ = Methylen, Ethylen, *n*-Propylen, *n*-Butylen, *n*-Pentylen, oder *n*-Hexylen ist, bevorzugt Methylen, und r = 0 oder 1, ausgewählt, wobei "&&" und "&" die oben angegebenen Bedeutungen haben, wobei insbesondere $R^5$ bis $R^{18}$ und $R^{24}$ bis $R^{30}$ unabhängig voneinander Alkyl mit 1 bis 6 Kohlenstoffatomen oder H, bevorzugt $R^5$ bis $R^{18}$ und $R^{24}$ bis $R^{30}$ jeweils H sind.

Am bevorzugtesten ist das erfindungsgemäße Polymer eines der chemischen Struktur **(I)** gemäß Punkt 4, wobei $R^1 = R^3$ = H, $R^2 = R^4$ = *tert*-Butyl, $B^1 = B^2$ = Methylen, $R^5$ bis $R^{18}$ jeweils H oder eines der chemischen Struktur **(II)** gemäß Punkt 4, wobei $R^{19} = R^{21}$ = H, $R^{20} = R^{23}$ = *tert*-Butyl, $B^3$ = Methylen, $R^{24}$ bis $R^{30}$ jeweils H, $R^{22}$ = Methyl.

Die erfindungsgemäßen Polymere unterscheiden sich von den von Nesvadba *et al.* und Weng *et al*. beschriebenen. Es wurde überraschend festgestellt, dass die erfindungsgemäßen Polymere zum Einsatz in Batterien geeignet sind, die eine höhere Entladespannung und vor allem einer überraschend hohen Kapazität der entsprechenden Batterie führt.

Das erfindungsgemäße Polymer umfasst $n^1$ miteinander verknüpfte Wiederholungseinheiten der chemischen Struktur **(I)** oder $n^2$ miteinander verknüpfte Wiederholungseinheiten der chemischen Struktur **(II).**
Dabei sind $n^1$ und $n^2$ unabhängig voneinander jeweils eine ganze Zahl $\geq 4$, insbesondere eine ganze Zahl $\geq 4$ und $\leq 5000$, bevorzugt eine ganze Zahl $\geq 10$ und $\leq 1000$. $m^1$, $m^2$, $m^3$ sind unabhängig voneinander eine ganze Zahl $\geq 0$, insbesondere $\geq 0$ und $\leq 5000$, bevorzugt $\geq 0$ und $\leq 1000$.

Dabei beträgt die durchschnittliche Molmasse (bestimmt mittels Größenausschlusschromatographie mit Polystyrolstandard; DIN 55672-2:2015-02) insbesondere 700 bis 2000000 g/mol, bevorzugt 1000 bis 1000000 g/mol, bevorzugter 3000 bis 300000 g/mol.
In dieser Erfindung sind in den Strukturen **(I)** und **(II)** mehrere Reste dargestellt, die über eine geschlängelte Bindung mit einem ersten $sp^2$ hybridisierten Kohlenstoffatom verknüpft sind, wobei dieses erste Kohlenstoffatom mit einem zweiten Kohlenstoffatom über eine Doppelbindung verbunden ist. Dies bedeutet, dass der betreffende Rest sowohl *cis* oder *trans* zu den Resten, welche mit dem zweiten Kohlenstoffatom verknüpft sind, stehen kann.

Die Wiederholungseinheiten der chemischen Struktur **(I)** sind innerhalb des Polymers gleich oder zumindest teilweise voneinander verschieden. Die Wiederholungseinheiten der chemischen Struktur **(II)** sind innerhalb des Polymers gleich oder zumindest teilweise voneinander verschieden. "Zumindest teilweise voneinander verschieden" bedeutet, dass sich mindestens zwei Wiederholungseinheiten voneinander unterscheiden.
Das heißt insbesondere im Falle der chemischen Struktur **(I),** dass sich mindestens zwei der $n^1$ miteinander verknüpften Wiederholungseinheiten in mindestens einem der Reste $A^1$ bis $A^6$, $R^1$ bis $R^{18}$, $B^1$, $B^2$ und/oder in dem Wert von $m^1$, $m^2$ und/oder der Position von $A^2$, $A^3$, $A^6$ am zentralen Phenylring unterscheiden.
Das heißt insbesondere im Falle der chemischen Struktur **(II),** dass sich mindestens zwei der $n^2$ miteinander verknüpften Wiederholungseinheiten in mindestens einem der Reste $A^7$ bis $A^{12}$, $R^{19}$ bis $R^{30}$, $B^3$ und/oder in dem Wert von $m^3$ unterscheiden.
Dabei sind die Wiederholungseinheiten der chemischen Struktur **(I)** innerhalb des Polymers so miteinander verknüpft, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist.
Dabei sind die Wiederholungseinheiten der chemischen Struktur **(II)** innerhalb des Polymers so miteinander verknüpft, dass die durch "*" gekennzeichnete Bindung einer bestimmten Wiederholungseinheit mit der durch "**" gekennzeichneten Bindung der benachbarten Wiederholungseinheit verknüpft ist.
Die Endgruppen der ersten Wiederholungseinheit des erfindungsgemäßen Polymers, welche sich für diese in der chemischen Struktur **(I)** an den durch "#" und "§" definierten Bindungen befindet, sowie die Endgruppen der $n^1$-ten Wiederholungseinheit des erfindungsgemäßen Polymers, welche sich für diese in der chemischen Struktur **(I)** an den durch "#" und "# #" definierten Bindungen befindet, sind nicht besonders beschränkt und ergeben sich aus der bei der Herstellungsmethode des erfindungsgemäßen Polymers verwendeten Polymerisationsmethode. So kann es sich dabei um Abbruchfragmente eines Initiators oder einer Wiederholungseinheit handeln. Bevorzugt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher bevorzugt Phenylrest, Benzylrest oder $\alpha$-Hydroxybenzyl ist.

Die Endgruppen der ersten Wiederholungseinheit des erfindungsgemäßen Polymers, welche sich für diese in der chemischen Struktur **(II)** an der durch "*" definierten Bindung befindet, sowie die Endgruppen der $n^2$-ten Wiederholungseinheit des erfindungsgemäßen Polymers, welche sich für diese in der chemischen Struktur **(II)** an der durch "**" definierten Bindung befindet, sind nicht besonders beschränkt und ergeben sich aus der bei der Herstellungsmethode des erfindungsgemäßen Polymers verwendeten Polymerisationsmethode. So kann es sich dabei um Abbruchfragmente eines Initiators oder einer Wiederholungseinheit handeln. Bevorzugt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe oder Alkenylgruppe sein kann), (hetero)aromatischer Rest, welcher bevorzugt Phenylrest, Benzylrest oder $\alpha$-Hydroxybenzyl ist.

In dieser Erfindung sind in den Strukturen **(I)** und **(II)** mehrere Reste dargestellt, die über eine geschlängelte Bindung mit einem ersten $sp^2$ hybridisierten Kohlenstoffatom verknüpft sind, wobei dieses erste Kohlenstoffatom mit einem zweiten Kohlenstoffatom über eine Doppelbindung verbunden ist. Dies bedeutet, dass der betreffende Rest sowohl *cis* oder *trans* zu den Resten, welche mit dem zweiten Kohlenstoffatom verknüpft sind, stehen kann.

Im Falle von $B^1$ bezeichnet "&&" die zu $A^5$ weisende Bindung. Dies ist die chemische Bindung, die $B^1$ mit $A^5$ verknüpft. Im Falle von $B^1$ bezeichnet "&" die zu $R^5$ weisende Bindung. Dies ist die andere in der chemischen Struktur **(I)** von $B^1$ wegführende chemische Bindung, also die chemische Bindung, die $B^1$ mit dem Kohlenstoffatom, an welchem $R^5$ hängt, verknüpft.

Im Falle von $B^2$ bezeichnet "&&" die zu $A^6$ weisende Bindung. Dies ist die chemische Bindung, die $B^2$ mit $A^6$ verknüpft. Im Falle von $B^2$ bezeichnet "&" die zu $R^8$ weisende Bindung. Dies ist die andere in der chemischen Struktur **(I)** von $B^2$ wegführende chemische Bindung, also die chemische Bindung, die $B^2$ mit dem Kohlenstoffatom, an welchem $R^8$ hängt, verknüpft.

Im Falle von $B^3$ bezeichnet "&&" die zu $A^7$ weisende Bindung. Dies ist die chemische Bindung, die $B^3$ mit $A^I$ verknüpft. Im Falle von $B^3$ bezeichnet "&" die zu $R^{24}$ weisende Bindung. Dies ist die andere in der chemischen Struktur **(II)** von $B^3$ wegführende chemische Bindung, also die chemische Bindung, die $B^3$ mit dem Kohlenstoffatom, an welchem $R^{24}$ hängt, verknüpft.

Im Falle von $B^4$ bezeichnet "&&" die zu $A^{13}$ weisende Bindung. Dies ist die chemische Bindung, die $B^4$ mit $A^{13}$ verknüpft. Im Falle von $B^4$ bezeichnet "&" die zu $R^{12}$ bzw. $R^{14}$ bzw. $R^{16}$ bzw. $R^{18}$ weisende Bindung. Dies ist die andere in der chemischen Struktur **(III)** von $B^4$ wegführende chemische Bindung, also die chemische Bindung, die, wenn die chemische Struktur **(III)** $R^{11}$ ist, $B^4$ mit dem Kohlenstoffatom, an welchem $R^{12}$ hängt, verknüpft bzw. die, wenn die chemische Struktur **(III)** $R^{13}$ ist, $B^4$ mit dem Kohlenstoffatom, an welchem $R^{14}$ hängt, verknüpft bzw. die, wenn die chemische Struktur **(III)** $R^{18}$ ist, $B^4$ mit dem Kohlenstoffatom, an welchem $R^{16}$ hängt, verknüpft bzw. die, wenn die chemische Struktur **(III)** $R^{11}$ ist, $B^4$ mit dem Kohlenstoffatom, an welchem $R^{18}$ hängt, verknüpft.

Ein aliphatischer Rest ist im Sinne der Erfindung eine acyclische oder cyclische, gesättigte oder ungesättigte, unverzweigte oder verzweigte Kohlenwasserstoffgruppe, die nicht aromatisch ist.

Ein aliphatischer Rest kann einwertig sein, das heißt nur über eines seiner Kohlenstoffatome mit dem restlichen Molekül verbunden sein. Ein einwertiger Kohlenwasserstoffrest ist insbesondere eine Kohlenwasserstoffgruppe ausgewählt aus Alkylgruppe, Alkenylgruppe, Alkinylgruppe, oder gesättigter oder ungesättigter Cycloalkylgruppe. Eine ungesättigte Cycloalkylgruppe nennt man bei Vorliegen einer Doppelbindung "Cycloalkenylgruppe", bei Vorliegen einer Dreifachbindung "Cycloalkinylgruppe".

Ein aliphatischer Rest kann alternativ zweiwertig sein, das heißt über zwei seiner Kohlenstoffatome mit dem restlichen Molekül verbunden sein. Ein zweiwertiger Kohlenwasserstoffrest ist insbesondere eine Kohlenwasserstoffgruppe ausgewählt aus Alkylengruppe, Alkenylengruppe, Alkinylengruppe, oder gesättigter oder ungesättigter Cycloalkylengruppe. Eine ungesättigte Cycloalkylengruppe nennt man bei Vorliegen einer Doppelbindung "Cycloalkenylengruppe", bei Vorliegen einer Dreifachbindung "Cycloalkinylengruppe".

Wenn in dieser Erfindung nicht explizit als zweiwertig bezeichnet, sind unter der Bezeichnung "aliphatischer Rest" im Sinne der Erfindung einwertige aliphatische Reste zu verstehen.

Im Sinne der Erfindung ist eine "Alkylgruppe" unverzweigt oder verzweigt und ein einwertiger gesättigter Kohlenwasserstoffrest, der die allgemeine chemische Struktur **(a)** mit

**(a)**: 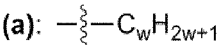 ;

aufweist.

Die Kette an Kohlenstoffatomen "-$C_wH_{2w+1}$" kann dabei linear sein, dann handelt es sich um eine unverzweigte

Alkylgruppe. Sie kann aber auch Verzweigungen aufweisen, dann handelt es sich um eine verzweigte Alkylgruppe.

Dabei ist w in der chemischen Struktur **(a)** eine ganze Zahl, insbesondere aus dem Bereich 1 bis 30, bevorzugt aus dem Bereich 1 bis 18, bevorzugter aus dem Bereich 1 bis 12, noch bevorzugter aus dem Bereich 1 bis 10, noch mehr bevorzugter aus dem Bereich 1 bis 8, am bevorzugtesten aus dem Bereich 1 bis 6. w ist bei einer unverzweigten oder verzweigten Alkylgruppe mit 1 bis 30 Kohlenstoffatomen ausgewählt aus dem Bereich 1 bis 30. w ist bei einer unverzweigten oder verzweigten Alkylgruppe mit 1 bis 18 Kohlenstoffatomen ausgewählt aus dem Bereich 1 bis 18. w ist bei einer unverzweigten oder verzweigten Alkylgruppe mit 1 bis 12 Kohlenstoffatomen ausgewählt aus dem Bereich 1 bis 12. w ist bei einer unverzweigten oder verzweigten Alkylgruppe mit 1 bis 10 Kohlenstoffatomen ausgewählt aus dem Bereich 1 bis 10. w ist bei einer unverzweigten oder verzweigten Alkylgruppe mit 1 bis 8 Kohlenstoffatomen ausgewählt aus dem Bereich 1 bis 8. w ist bei einer unverzweigten oder verzweigten Alkylgruppe mit 1 bis 6 Kohlenstoffatomen ausgewählt aus dem Bereich 1 bis 6.

Im Sinne der Erfindung ist eine "unverzweigte oder verzweigte Alkylgruppe mit 1 bis 30 Kohlenstoffatomen" insbesondere ausgewählt aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl, *n*-Tridecyl, *n*-Tetradecyl, *n*-Pentadecyl, *n*-Hexadecyl, *n*-Heptadecyl, *n*-Octadecyl, *n*-Nonadecyl, *n*-Eicosyl, *n*-Heneicosyl, n- Docosyl, *n*-Tricosyl, *n*-Tetracosyl, *n*-Pentacosyl, *n*-Hexacosyl, *n*-Heptacosyl, *n*-Octocosyl, *n*-Nonacosyl, *n*-Tricontyl.

Im Sinne der Erfindung ist eine "unverzweigte oder verzweigte Alkylgruppe mit 1 bis 18 Kohlenstoffatomen" insbesondere ausgewählt aus der Gruppe bestehend aus Methyl, Ethyl, *n*-Propyl, *iso*-Propyl, *n*-Butyl, sec-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl, *n*-Tridecyl, *n*-Tetradecyl, *n*-Pentadecyl, *n*-Hexadecyl, *n*-Heptadecyl, *n*-Octadecyl.

Im Sinne der Erfindung ist eine "unverzweigte oder verzweigte Alkylgruppe mit 1 bis 12 Kohlenstoffatomen" insbesondere ausgewählt aus der Gruppe bestehend aus Methyl, Ethyl, *n*-Propyl, *iso*-Propyl, *n*-Butyl, sec-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl.

Im Sinne der Erfindung ist eine "unverzweigte oder verzweigte Alkylgruppe mit 1 bis 10 Kohlenstoffatomen" insbesondere ausgewählt aus der Gruppe bestehend aus Methyl, Ethyl, *n*-Propyl, *iso*-Propyl, *n*-Butyl, sec-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl.

Im Sinne der Erfindung ist eine "unverzweigte oder verzweigte Alkylgruppe mit 1 bis 8 Kohlenstoffatomen" insbesondere ausgewählt aus der Gruppe bestehend aus Methyl, Ethyl, *n*-Propyl, *iso*-Propyl, *n*-Butyl, sec-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl.

Im Sinne der Erfindung ist eine "unverzweigte oder verzweigte Alkylgruppe mit 1 bis 6 Kohlenstoffatomen" insbesondere ausgewählt aus der Gruppe bestehend aus Methyl, Ethyl, *n*-Propyl, *iso*-Propyl, *n*-Butyl, sec-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl.

Eine Alkylgruppe mit 1 bis 30 Kohlenstoffatomen ist erfindungsgemäß insbesondere eine Alkylgruppe mit 1 bis 18, bevorzugt 1 bis 12, bevorzugter 1 bis 10, noch bevorzugter 1 bis 8, am bevorzugtesten 1 bis 6 Kohlenstoffatomen.

Eine Alkylgruppe mit 1 bis 6 Kohlenstoffatomen ist erfindungsgemäß insbesondere eine Alkylgruppe mit 1 bis 4 Kohlenstoffatomen und noch bevorzugter ausgewählt aus Methyl, Ethyl, *n*-Propyl, *iso*-Propyl, *n*-Butyl, *sec*-Butyl, *tert*-Butyl.

Im Sinne der Erfindung ist eine "Alkenylgruppe" unverzweigt oder verzweigt und ergibt sich aus einer Alkylgruppe durch Substitution mindestens einer CH-CH-Einfachbindung in der Alkylgruppe durch eine C=C-Doppelbindung.

Im Sinne der Erfindung ist eine "Alkinylgruppe" unverzweigt oder verzweigt und ergibt sich aus einer Alkylgruppe durch Substitution mindestens einer $CH_2$-$CH_2$-Einfachbindung in der Alkylgruppe durch eine C≡C-Dreifachbindung oder aus einer Alkenylgruppe durch Substitution mindestens einer $CH_2$-$CH_2$-Einfachbindung und/oder einer CH=CH-Doppelbindung in der Alkenylgruppe durch jeweils eine C≡C-Dreifachbindung.

Eine gesättigte Cycloalkylgruppe ist ein Alkylrest, in dem mindestens 3 Kohlenstoffatome innerhalb eines gesättigten Ringes vorliegen, und kann daneben auch noch weitere nicht im Ring vorliegende Kohlenstoffatome umfassen. Sie kann über eines dieser Ring-Kohlenstoffatome oder über Kohlenstoffatome, die nicht innerhalb des Ringes vorliegen, mit dem restlichen Molekül verknüpft sein. Im Sinne der Erfindung ist eine Cycloalkylgruppe insbesondere ausgewählt aus Cyclopropyl, Cyclobutyl, Cyclopropylmethyl, Cyclopentyl, Cyclobutylmethyl, Cyclohexyl, Cycloheptyl, Cyclooctyl, Cyclononyl, Cyclodecyl, Cycloundecyl, Cyclododecyl, Cyclotridecyl, Cyclotetradecyl, Cyclopentadecyl.

Eine ungesättigte Cycloalkylgruppe ergibt sich aus einer gesättigten Cycloalkylgruppe durch Substitution mindestens einer CH-CH-Einfachbindung in der gesättigten Cycloalkylgruppe durch mindestens eine C=C-Doppelbindung (zur Cycloalkenylgruppe) und/oder einer $CH_2$-$CH_2$-Einfachbindung durch eine C≡C-Dreifachbindung (zur Cycloalkinylgruppe).

Eine Alkylengruppen hat im Sinne der Erfindung insbesondere 1 bis 30, bevorzugt 1 bis 12, noch bevorzugter 1 bis 6 Kohlenstoffatome und kann im Sinne der Erfindung verzweigt oder unverzweigt sein. "Alkylengruppe" bezeichnet im Sinne der Erfindung einen zweiwertigen gesättigten Kohlenwasserstoffrest, welcher durch die allgemeine chemische Struktur **(b)** mit

**(b)**: 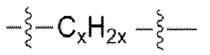 ;

beschrieben werden kann. Die Kette an Kohlenstoffatomen"-$C_xH_{2x}$" kann dabei linear sein, dann handelt es sich um eine unverzweigte Alkylengruppe. Sie kann aber auch Verzweigungen aufweisen, dann handelt es sich um eine verzweigte Alkylengruppe. Dabei ist x in der chemischen Struktur **(b)** eine ganze Zahl.

x ist bei einer unverzweigten oder verzweigten Alkylengruppe mit 1 bis 30 Kohlenstoffatomen ausgewählt aus dem Bereich 1 bis 30.

x ist bei einer unverzweigten oder verzweigten Alkylengruppe mit 1 bis 12 Kohlenstoffatomen ausgewählt aus dem Bereich 1 bis 12.

x ist bei einer unverzweigten oder verzweigten Alkylengruppe mit 1 bis 6 Kohlenstoffatomen ausgewählt aus dem Bereich 1 bis 6.

Eine Alkylengruppe weist erfindungsgemäß insbesondere 1 bis 6 Kohlenstoffatome auf, bevorzugt 1 bis 4 Kohlenstoffatome auf und ist noch bevorzugter ausgewählt aus Methylen, Ethylen, *n*-Propylen, *n*-Butylen.

Im Sinne der Erfindung ist eine "Alkenylengruppe" unverzweigt oder verzweigt und ergibt sich aus einer Alkylengruppe durch Substitution mindestens einer CH-CH-Einfachbindung in der Alkylengruppe durch eine C=C-Doppelbindung.

Im Sinne der Erfindung ist eine "Alkinylengruppe" unverzweigt oder verzweigt und ergibt sich aus einer Alkylgruppe durch Substitution mindestens einer $CH_2$-$CH_2$-Einfachbindung in der Alkylengruppe durch eine C≡C-Dreifachbindung oder aus einer Alkenylengruppe durch Substitution mindestens einer CH=CH-Doppelbindung in der Alkenylengruppe durch eine C≡C-Dreifachbindung.

Im Sinne der Erfindung ist eine gesättigter Cycloalkylengruppe eine zweiwertige gesättigte Kohlenwasserstoffgruppe mit mindestens 3, insbesondere 3 bis 30 Kohlenstoffatomen, welche mindestens einen gesättigten Ring aus 3 bis 30 Kohlenstoffatomen aufweist, bevorzugt eine chemische Struktur **(c)** mit

**(c)**: 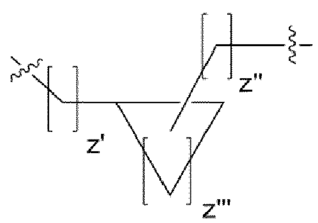 ;

wobei z' insbesondere eine ganze Zahl zwischen 0 und 27 ist; wobei z" insbesondere eine ganze Zahl zwischen 0 und 27 ist; wobei z'" insbesondere eine ganze Zahl zwischen 1 und 28 ist; und wobei gleichzeitig gilt, dass z' + z" + z'" ≤ 28.

Im Sinne der Erfindung ergibt sich eine ungesättigte Cycloalkylengruppe aus einer gesättigten Cycloalkylengruppe durch Substitution mindestens einer CH-CH-Einfachbindung in der Cycloalkylengruppe durch eine C=C-Doppelbindung (zur Cycloalkenylengruppe) und/oder durch Substitution mindestens einer $CH_2$-$CH_2$-Einfachbindung in der Cycloalkylengruppe durch eine C≡C-Dreifachbindung (zur Cycloalkinylengruppe).

Ein (hetero)aromatischer Rest ist im Sinne der Erfindung ein heteroaromatischer oder ein aromatischer Rest. Ein (hetero)aromatischer Rest kann einwertig sein, das heißt nur über eines seiner Kohlenstoffatome (im Falle eines aromatischen Rests) bzw. über eines seiner Kohlenstoff- oder Heteroatome (im Falle eines heteroaromatischen Restes) mit dem restlichen Molekül verbunden sein.

Ein (hetero)aromatischer Rest kann alternativ zweiwertig sein, das heißt über zwei seiner Kohlenstoffatome mit dem restlichen Molekül verbunden sein (im Falle eines aromatischen Rests) bzw. über zwei seiner Kohlenstoffatome, zwei seiner Heteroatome oder eines seiner Kohlenstoffatome und eines seiner Heteroatome (im Falle eines heteroaromatischen Restes) mit dem restlichen Molekül verbunden sein.

Wenn in dieser Erfindung nicht explizit als zweiwertig bezeichnet, sind unter der Bezeichnung "(hetero)aromatischer Rest" im Sinne der Erfindung einwertige (hetero)aromatische Reste zu verstehen.

Ein aromatischer Rest weist ausschließlich Kohlenstoffatome und mindestens einen aromatischen Ring auf. Ein aromatischer Rest ist insbesondere ausgewählt Arylrest, Aralkylrest, Alkarylrest. Arylreste weisen ausschließlich aromatische Ringe auf und sind über ein Kohlenstoffatom des aromatischen Ringes mit dem Molekül verknüpft. Bevorzugt ist ein Arylrest Phenyl.

Alkarylreste weisen mindestens einen aromatischen Ring auf, über welchen sie mit dem restlichen Molekül verknüpft sind und tragen daneben auch Alkylreste am aromatischen Ring. Bevorzugt ist ein Alkarylrest Tolyl.

Aralkylreste gehen formal durch Substitution eines Wasserstoffrestes einer Alkylgruppe mit einer Arylgruppe oder einer Alkarylgruppe hervor. Bevorzugt ist ein Aralkylrest Benzyl, Phenylethyl, α-Methylbenzyl.

Ein heteroaromatischer Rest ist insbesondere ausgewählt Hetero-Arylrest, Hetero-Aralkylrest, Alkylheteroarylrest. Es ist ein aromatischer Rest, der zusätzlich mindestens ein Heteroatom, insbesondere ein Heteroatom ausgewählt aus der Gruppe bestehend aus Stickstoff, Sauerstoff, Schwefel innerhalb des aromatischen Ringes, oder, im Falle eines Hetero-Aralkylrests oder eines Alkylheteroarylrestes, alternativ oder zusätzlich außerhalb des aromatischen Ringes aufweist.

Bevorzugte (hetero)aromatische Reste sind ausgewählt aus der Gruppe bestehend aus einem Ring der vorstehend definierten chemischen Struktur **(III),** Azol, Imidazol, Pyrrol, Pyrazol, Triazol, Tetrazol, Thiophen, Furan, Thiazol, Thiadiazol, Oxazol, Oxadiazole, Pyridin, Pyrimidin, Triazin, Tetrazin, Thiazine, Benzofuran, Purin, Indol, 9-Anthryl, 9-Phenanthryl.

Ein zweiwertiger (hetero)aromatischer Rest ist im Sinne der Erfindung ein zweiwertiger aromatischer Rest oder ein zweiwertiger heteroaromatischer Rest.

Ein zweiwertiger aromatischer Rest ist erfindungsgemäß eine zweiwertige Kohlenwasserstoffgruppe mit mindestens 6, bevorzugt 6 bis 30, Kohlenstoffatomen, von denen mindestens 6 Kohlenstoffatome in einem aromatischen System vorliegen und die übrigen Kohlenstoffatome, falls vorhanden, gesättigt sind. Der zweiwertige aromatische Rest kann über Kohlenstoffatome des aromatischen Systems oder, falls vorhanden, gesättigte Kohlenstoffatome mit dem restlichen Molekül verknüpft sein.

Bevorzugt ist ein zweiwertiger aromatischer Rest eine chemische Struktur **(d)** mit

**(d)**: 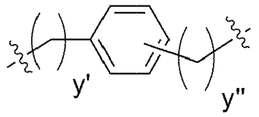 ;

wobei y' eine ganze Zahl > 0, bevorzugt zwischen 0 und 24 ist; wobei y" eine ganze Zahl > 0, bevorzugt zwischen 0 und 24 ist; und wobei bevorzugt gleichzeitig gilt, dass y' + y" ≤ 24.

Ein zweiwertiger heteroaromatischer Rest ist ein zweiwertiger aromatischer Rest, der zusätzlich mindestens ein Heteroatom, insbesondere mindestens ein Heteroatom ausgewählt aus der Gruppe bestehend aus Stickstoff, Sauerstoff, Schwefel innerhalb oder außerhalb des aromatischen Ringes, bevorzugt innerhalb des aromatischen Ringes, aufweist, aber insbesondere über Kohlenstoffatome mit dem restlichen Molekül verknüpft ist.

"Gegebenenfalls mit mindestens einer Gruppe ausgewählt aus Nitrogruppe, -$NH_2$, CN, SH, OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest" bedeutet, dass mindestens ein an Kohlenstoffatom gebundenes Wasserstoffatom im aliphatischen Rest durch eine Gruppe ausgewählt aus Nitrogruppe, -$NH_2$, -CN, -SH, -OH, Halogen ersetzt sein kann (aber nicht muss) und/oder dass in dem aliphatischen Rest mindestens eine mit zwei $sp^3$-hybridisierten Kohlenstoffatomen, bevorzugt mit zwei -$CH_2$-Gruppen, noch bevorzugter mit zwei -$CH_2CH_2$-Gruppen, verknüpfte $CH_2$-Gruppe durch ein Sauerstoffatom (dann liegt eine Ethergruppe vor), ein Schwefelatom (dann liegt eine Thioethergruppe vor), eine NH oder N-Alkylgruppe

(dann liegt eine Aminoethergruppe vor), eine -C(=O)-Gruppe (dann liegt eine Carbonylgruppe vor), eine -C(=O)-O-Gruppe (dann liegt eine Carbonsäureestergruppe vor), eine -C(=O)-NH- oder -C(=O)-N(Alkyl)-Gruppe (dann liegt eine Carbonsäureamidgruppe vor), eine $-SO_2$-O-Gru (dann liegt ein Sulfonnsäureester vor), eine $-OPO_2$-O-Gruppe (dann liegt ein Phosphorsäureester vor) substituiert sein kann (aber nicht muss).

"Zweiwertiger, gegebenenfalls mit mindestens einer Gruppe ausgewählt aus Nitrogruppe, $-NH_2$, CN, SH, OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest" bedeutet, dass mindestens ein an Kohlenstoffatom gebundenes Wasserstoffatom im zweiwertigen aliphatischen Rest durch eine Gruppe ausgewählt aus Nitrogruppe, $-NH_2$, -CN, -SH, -OH, Halogen ersetzt sein kann (aber nicht muss) und/oder dass in dem aliphatischen Rest mindestens eine mit zwei $sp^3$-hybridisierten Kohlenstoffatomen, bevorzugt mit zwei $-CH_2$-Gruppen, noch bevorzugter mit zwei $-CH_2CH_2$-Gruppen, verknüpfte $-CH_2$-Gruppe durch ein Sauerstoffatom (dann liegt eine Ethergruppe vor), ein Schwefelatom (dann liegt eine Thioethergruppe vor), eine NH oder N-Alkylgruppe (dann liegt eine Aminoethergruppe vor), eine - C(=O)-Gruppe (dann liegt eine Carbonylgruppe vor), eine -C(=O)-O-Gruppe (dann liegt eine Carbonsäureestergruppe vor), eine -C(=O)-NH- oder -C(=O)-N(Alkyl)-Gruppe (dann liegt eine Carbonsäureamidgruppe vor), eine $-SO_2$-O-Gruppe (dann liegt ein Sulfonnsäureester vor), eine $-OPO_2$-O-Gruppe (dann liegt ein Phosphorsäureester vor) substituiert sein kann (aber nicht muss).

Die erfindungsgemäßen Polymere können auf einfache und aufwandgeringe Weise sowie aus gut zugänglichen Startmaterialien hergestellt werden. Abhängig von der verwendeten Polymerisationsart können die Monomere teilweise aus kommerziell zu einem sehr geringen Preis erhältlichen Ausgangsstoffen in nur einer Synthesestufe ohne chromatographische Trennverfahren hergestellt werden, was einen deutliche Fortschritt gegenüber den in der Fachliteratur bekannten Herstellungsmethoden bietet. Zur Polymerisation ist kein weiteres Monomer nötig und als Herstellungsmethode können dem Fachmann geläufige Polymerisationsverfahren verwendet werden. Dabei können Polymere mit hoher Molmasse in sehr hohen Ausbeuten erhalten werden. Durch die Einführung von polymerisierbaren Gruppen mit vergleichsweise geringer Molmasse kann die Monomermolmasse niedrig gehalten und die theoretische Kapazität (die umgekehrt proportional zur Molmasse ist) des sekundären elektrischen Ladungsspeichers maximiert werden. Ferner stehen in diesen Polymeren die redoxaktiven Gruppen nicht in Konjugation miteinander; als Konsequenz weist der elektrische Ladungsspeicher ein flaches Lade-/Entladeplateau auf. Diese Materialien unterscheiden sich vom Stand der Technik durch eine sehr einfache Synthese aus kommerziell zu einem sehr geringen Preis erhältlichen Ausgangsstoffen in teilweise nur einer Synthesestufe ohne chromatographische Trennverfahren. Weiterhin ermöglicht das hohe Redoxpotential der Polymere gemäß der Erfindung höhere Zellspannungen und Energiedichten als in den bekannten Systemen und erlaubt höhere Entladespannungen.

Die Polymere gemäß dieser Erfindung können sowohl Homopolymere als auch Copolymere sein. Homopolymere sind Polymere, die nur aus einem Monomer synthetisiert wurden. Copolymere sind Polymere, die aus zwei oder mehreren Monomeren synthetisiert wurden. Werden zwei oder mehrere Monomere bei der Synthese verwendet, so können die Monomere der Wiederholeinheiten der Polymere gemäß dieser Erfindung sowohl in statistischer Verteilung, als Blöcke oder alternierend im Polymer vorliegen. Die Polymere gemäß dieser Erfindung können sowohl in linearer Form [wie in Struktur **(II)]** als auch als quervernetzt [wie in Struktur **(I)**] vorliegen.

Die erfindungsgemäßen Polymere können durch eine dem Fachmann bekannte Polymerisation einer Verbindung der folgenden Struktur **(I)’** oder **(II)’**, optional auch mit einer Verbindung der folgenden Struktur **(III)’,** synthetisiert werden. In den Strukturen **(I)’** oder **(II)’** im folgenden Schema haben die Reste $R^{1'}$ bis $R^{10'}$, $R^{11'}$ bis $R^{14'}$ und $R^{19'}$ bis $R^{26'}$, $B^{1'}$ bis $B^{3'}$, $A^{1'}$ bis $A^{12'}$, $H^{1'}$ bis $H^{3'}$ jeweils die vorstehend für $R^1$ bis $R^{10}$, $R^{11}$ bis $R^{14}$ und $R^{19}$ bis $R^{26}$, $B^1$ bis $B^3$, $A^1$ bis $A^{12}$ und $H^1$ bis $H^3$ angegebenen Bedeutungen. $H^{4'}$ hat die für $H^1$ angegebene Bedeutung.

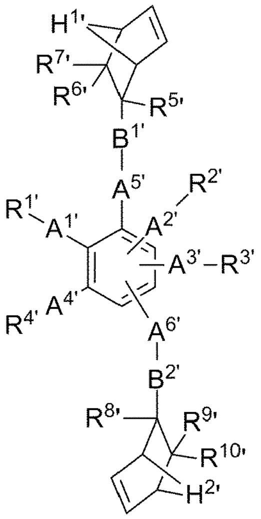

(I)'

;

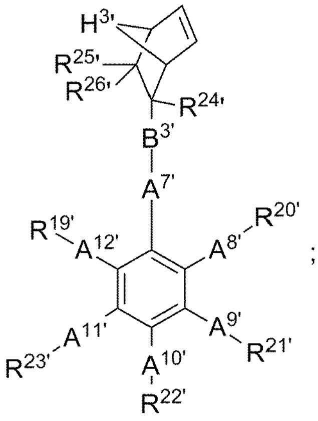

(II)'

;

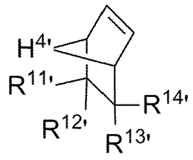

(III)'

.

Ein Polymer der Struktur **(I)** kann dabei durch eine Polymerisation, in der ausschließlich Monomere der Struktur **(I)'** eingesetzt werden, erhalten werden, so dass das erhaltene Polymer der Struktur **(I)** ein Homopolymer darstellt, in welchem $m^1 = m^2 = 0$.

Ein Polymer der Struktur **(I)** kann dabei durch eine Polymerisation, in der Monomere der Struktur **(I)'** und **(II)'** eingesetzt werden, erhalten werden, so dass das erhaltene Polymer der Struktur **(I)** ein Copolymer darstellt, in welchem $m^1$, $m^2 \geq 0$ und die Reste $R^{11}$, $R^{13}$, $R^{15}$ oder $R^{17}$ in der obigen Struktur **(I)** unabhängig voneinander jeweils eine Gruppe der vorgenannten allgemeinen Struktur **(III)** sind.

Ein Polymer der Struktur **(I)** kann dabei durch eine Polymerisation, in der Monomere der Struktur **(I)'** und **(III)'** eingesetzt werden, erhalten werden, so dass das erhaltene Polymer der Struktur **(I)** ein Copolymer darstellt, in welchem $m^1$, $m^2 \geq 0$ und die Reste $R^{11}$, $R^{13}$, $R^{15}$, $R^{17}$ in der obigen Struktur **(I)** keine Gruppe der allgemeinen Struktur **(III)** sein können.

Ein Polymer der Struktur **(I)** kann dabei durch eine Polymerisation, in der Monomere der Struktur **(I)'**, **(II)'** und **(III)'** eingesetzt werden, erhalten werden, so dass das erhaltene Polymer der Struktur **(I)** ein Copolymer darstellt, in welchem $m^1$, $m^2 \geq 0$ und die Reste $R^{11}$, $R^{13}$, $R^{15}$, $R^{17}$ in der obigen Struktur **(I)** unabhängig voneinander jeweils auch eine Gruppe der vorgenannten allgemeinen Struktur **(III)** sein können.

Ein Polymer der Struktur **(II)** kann dabei durch eine Polymerisation, in der ausschließlich Monomere der Struktur **(II)'** eingesetzt werden, erhalten werden, so dass das erhaltene Polymer der Struktur **(II)** ein Homopolymer darstellt, in welchem $m^3 = 0$.

Ein Polymer der Struktur **(II)** kann dabei durch eine Polymerisation, in der Monomere der Struktur **(II)'** und **(III)'** eingesetzt werden, erhalten werden, so dass das erhaltene Polymer der Struktur **(II)** ein Copolymer darstellt, in welchem $m^3 \geq 0$.

Die Verbindungen der Strukturen **(I)'** und **(II)'** sind dem Fachmann über bekannte Verfahren zugänglich, z.B. über Umsetzung eines Dihydroxybenzols oder Di-(hydroxymethyl)-benzols mit dem entsprechenden Norbonenderivat, wie im folgenden Schema (Syntheseschema 1) skizziert. Die Beispiele sind anhand der oben genannten Struktur **(I)'** gezeigt, aber entsprechend für die Synthese einer Verbindung der oben genannten Struktur **(II)'**. $R^A$, $R^B$, $R^C$, $R^D$ entsprechen $A^{1'}$-$R^{1'}$, $A^{2'}$-$R^{2'}$, $N^{3'}$-$R^{3'}$, $A^{4'}$-$R^{4'}$ aus der Struktur **(I)'**.

**Syntheseschema 1**

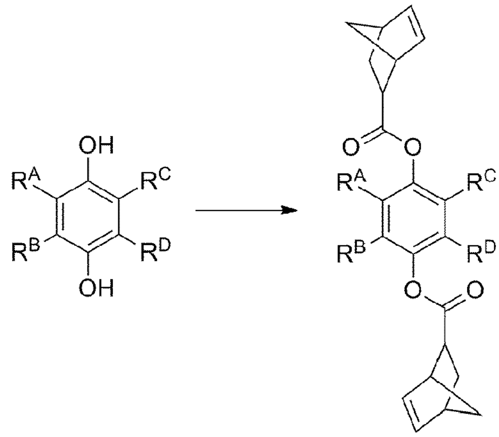

;

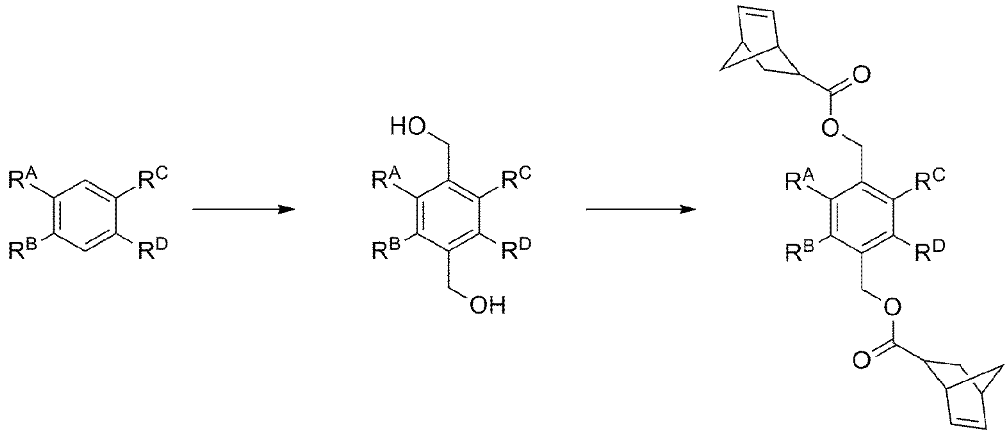

Die erfindungsgemäßen Polymere gemäß den chemischen Strukturen **(I)** und **(II)** können durch dem Fachmann geläufige Polymerisationsmethoden wie der Synthese von Polynorbornenen und deren Abwandlungen aus den jeweiligen Monomeren **(I)'**, **(II)'** und **(III)'** synthetisiert werden.

Es hat sich als vorteilhaft erwiesen, die Polymerisation in Gegenwart von Leitfähigkeitsadditiven wie zum Beispiel den nachfolgend beschriebenen Kohlenstoffmaterialien (und auch Ruß wie zum Beispiel "SuperP®") durchzuführen, wie in A. Vlad, J. Rolland, G. Hauffman, B. Ernould, J.-F. Gohy, ChemSusChem **2015**, *8*, 1692 - 1696 für andere Polymere beschrieben.

Die Polymerisation wird bevorzugt metallkatalysiert in einem Temperaturbereich von -30 bis 150 °C, vorteilhaft in einem Temperaturbereich von 0 bis 100 °C, in einem Lösungsmittel und einer Reaktionszeit von 0.1 bis 100 Stunden unter der Verwendung eines Katalysators, wie beispielsweise einem Grubbs-Katalysator, einem Molybdänkomplex, einem Wolframkomplex, einem Rutheniumkomplex durchgeführt. Für verwendete Lösungsmittel besteht keine Einschränkung. Bevorzugt sind organische Lösungsmittel, wie beispielsweise *N,N'*-Dimethylformamid, *N,N'*-Dimethylacetamid, Dimethylsulfoxid, *N*-Methylpyrrolidon, Dichlormethan, 1,2-Dichlorethan, Tetrahydrofuran, Toluol, Xylol, Chlorbenzol, o-Dichlorbenzol.

Das erfindungsgemäße Polymer eignet sich insbesondere zur Verwendung als redoxaktives Elektrodenmaterial in einem elektrischen Ladungsspeicher, bevorzugt zur Speicherung elektrischer Energie, und noch bevorzugter als positives Elektrodenelement.

Noch bevorzugter ist das redoxaktive Elektrodenmaterial dabei als mindestens teilweise Oberflächenbeschichtung von Elektrodenelementen für elektrische Ladungsspeicher, insbesondere Sekundärbatterien, ausgebildet. Elektrodenelemente umfassen dabei mindestens eine Oberflächenschicht und ein Substrat.

Ein redoxaktives Material zur Speicherung elektrischer Energie ist ein Material, welches elektrische Ladung beispielsweise durch Aufnahme bzw. Abgabe von Elektronen speichern und wieder abgeben kann. Dieses Material kann beispielsweise als aktives Elektrodenmaterial in einem elektrischen Ladungsspeicher eingesetzt werden. Solche elektrischen Ladungsspeicher zur Speicherung elektrischer Energie sind insbesondere aus der Gruppe bestehend aus Sekundärbatterien (oder auch "Akkumulatoren" genannt), Redox-Flowbatterien, Superkondensatoren ausgewählt und bevorzugt Sekundärbatterien.

Bevorzugt handelt es sich bei dem elektrischen Ladungsspeicher um eine Sekundärbatterie. Eine Sekundärbatterie umfasst eine negative und eine positive Elektrode, die durch einen Separator voneinander getrennt werden, sowie einem Elektrolyt, welcher die Elektroden und den Separator umschließt.

Der Separator ist eine poröse Schicht, die ionendurchlässig ist und den Ladungsausgleich ermöglicht. Die Aufgabe des Separators besteht darin, die positive Elektrode von der negativen Elektrode zu trennen und den Ladungsausgleich durch Permutation von Ionen zu ermöglichen. Als Separator der sekundären Batterie wird insbesondere ein poröses Material, bevorzugt eine Membran bestehend aus einer polymeren Verbindung, wie beispielsweise Polyolefin, Polyamid, oder Polyester, verwendet. Weiterhin können Separatoren aus porösen keramischen Materialien verwendet werden.

Die Hauptaufgabe des Elektrolyten ist, die Ionenleitfähigkeit zu gewährleisten, die zum Ladungsausgleich nötig ist. Der Elektrolyt der sekundären Batterie kann sowohl eine Flüssigkeit, als auch eine oligomere oder polymere Verbindung mit hoher Ionenleitfähigkeit ("*gel electrolyte*" oder "*solid state elctrolyte"*) sein. Bevorzugt ist er aber eine oligomere oder polymere Verbindung. Ist der Elektrolyt flüssig, so setzt er sich insbesondere aus einem oder mehreren Lösungsmitteln und einem oder mehreren Leitsalzen zusammen.

Das Lösungsmittel der Elektrolyten umfasst bevorzugt unabhängig voneinander eines oder mehrere Lösungsmittel mit hohem Siedepunkt und hoher Ionenleitfähigkeit, aber niedriger Viskosität, wie beispielsweise Acetonitril, Dimethylsulfoxid, Ethylencarbonat, Propylencarbonat, Dimethylcarbonat, Diethylcarbonat, Methylethylcarbonat, $\gamma$-Butyrolacton, Tetrahydrofuran, Dioxolan, 1,2-Dimethoxyethan, 1,2-Diethoxyethan, Diglyme, Triglyme, Tetraglyme, Ethylacetat, 1,3-Dioxolan oder Wasser.

Das Leitsalz des Elektrolyten besteht aus einem Kation der Formel $M^{e+}$ und einem Anion oder Formel $An^{f-}$ der Formel $(M^{e+})_a(An^{f-})_b$, wobei e und f Ganzzahlen in Abhängigkeit der Ladung von M und An sind; a und b sind Ganzzahlen, welche die molekulare Zusammensetzung des Leitsalzes repräsentieren.

Als Kation des oben genannten Leitsalzes werden positiv geladene Ionen, bevorzugt Metalle der ersten und zweiten Hauptgruppe, wie beispielsweise Lithium, Natrium, Kalium oder Magnesium, aber auch andere Metalle der Nebengruppen, wie Zink, sowie organische Kationen, wie beispielsweise quartäre Ammoniumverbindungen wie Tetraalkylammoniumverbindungen, verwendet. Bevorzugtes Kation ist Lithium.

Als Anionen des besagten Leitsalzes werden bevorzugt anorganische Anionen, wie Hexafluorophosphat, Tetrafluoroborat, Triflat, Hexafluoroarsenat, Hexafluoroantimonat, Tetrafluoroaluminat, Tetrafluoroindat, Perchlorat, Bis(oxolato)borat, Tetrachloroaluminiat, Tetrachlorogallat, aber auch organische Anionen, wie beispielsweise $N(CF_3SO_2)_2^-$, $CF_3SO_3^-$, Alkoholate, wie beispielsweise, *tert*-Butanolat oder *iso*-Propylalkoholat, aber auch Halogenide, wie Fluorid, Chlorid, Bromid sowie Iodid, verwendet. Bevorzugtes Anion ist Perchlorat, $ClO_4^-$. Bevorzugtes Leitsalz ist somit $LiClO_4$.

Werden ionische Flüssigkeiten verwendet, können diese sowohl als Lösungsmittel des Elektrolyten, als Leitsalz aber auch als kompletter Elektrolyt verwendet werden.

In der Ausführungsform, in der das redoxaktive Elektrodenmaterial dabei als mindestens teilweise Oberflächenbeschichtung von Elektrodenelementen für elektrische Ladungsspeicher, insbesondere Sekundärbatterien, ausgebildet ist, weist ein Elektrodenelement mindestens teilweise eine Schicht auf einer Substratoberfläche auf. Diese Schicht umfasst insbesondere eine Zusammensetzung, enthaltend das erfindungsgemäße Polymer als redoxaktives Material zur Ladungsspeicherung und insbesondere zumindest auch ein Leitfähigkeitsadditiv sowie insbesondere auch zumindest ein Bindeadditiv.

Die Aufbringung dieser Zusammensetzung (anderer Ausdruck für Zusammensetzung: "Komposit") auf dem Substrat ist mittels dem Fachmann bekannten Verfahren möglich. Insbesondere wird das erfindungsgemäße Polymer mit Hilfe eines Elektrodenslurrys auf dem Substrat aufgebracht.

Das Substrat des Elektrodenelements ist insbesondere ausgewählt aus leitfähigen Materialien, bevorzugt Metallen, Kohlenstoffmaterialien, Oxidsubstanzen.

Bevorzugte Metalle sind ausgewählt aus Platin, Gold, Eisen, Kupfer, Aluminium oder eine Kombination aus diesen Metallen. Bevorzugte Kohlenstoffmaterialien, sind ausgewählt aus Glaskohlenstoff, Graphitfolie, Graphen, Kohlenstofffelle. Bevorzugte Oxidsubstanzen sind beispielsweise ausgewählt aus der Gruppe bestehend aus Indiumzinnoxid (ITO), Indiumzinkoxid (IZO), Antimonzinkoxid (AZO), Fluorzinnoxid (FTO) oder Antimonzinnoxid (ATO).

Die Oberflächenschicht des Elektrodenelements umfasst zumindest das erfindungsgemäße Polymer als redoxaktives Material zur Ladungsspeicherung sowie insbesondere zumindest ein Leitfähigkeitsadditiv und ein Bindeadditiv.

Das Leitfähigkeitsadditiv ist insbesondere mindestens ein elektrisch leitendes Material, bevorzugt ausgewählt aus der Gruppe bestehend aus Kohlenstoffmaterialen, elektrisch leitenden Polymeren, insbesondere sind es Kohlenstoffmaterialien. Kohlenstoffmaterialien sind insbesondere aus der Gruppe bestehend aus Kohlenstofffasern, Kohlenstoffnanoröhren, Graphit, Ruß, Graphen ausgewählt, und sind besonders bevorzugt Kohlenstofffasern. Elektrisch leitende Polymere sind insbesondere aus der Gruppe bestehend aus Polyanilinen, Polythiophenen, Polyacetylenen, Poly(3,4-ethylendioxythiophen)polystyrensulfonat (= PEDOT:PSS), Polyarcene ausgewählt.

Bindeadditive sind insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylate, Polymethacrylate, Polysulfone, Cellulosederivate, Polyurethane.

Das erfindungsgemäße Polymer wird dabei insbesondere in einem Elektrodenslurry auf das Substrat des Elektrodenelementes aufgebracht.

Der Elektrodenslurry ist eine Lösung oder Suspension und umfasst das erfindungsgemäße Polymer sowie insbesondere das vorstehend beschriebene Leitfähigkeitsadditiv und das vorstehend beschriebene Bindeadditiv.
Der Elektrodenslurry umfasst bevorzugt ein Lösungsmittel und weitere Bestandteile umfassend redoxaktives Material zur Speicherung elektrischer Energie (bei dem es sich insbesondere um das erfindungsgemäße Polymer handelt), sowie bevorzugt auch das Leitfähigkeitsadditiv und das Bindeadditiv.

In den weiteren Bestandteilen ist bevorzugt der Anteil an redoxaktivem Material zur Speicherung elektrischer Energie (bei dem es sich insbesondere um das erfindungsgemäße Polymer handelt) von 5 bis 100 Gewichtsprozent, der Anteil des Leitfähigkeitsadditiv 0 bis 80, bevorzugt 5 bis 80, Gewichtsprozent, und der Anteil an Bindeadditiv 0 bis 10, bevorzugt 1 bis 10, Gewichtsprozent, wobei die Summe 100 Gewichtsprozent ergibt.

Als Lösungsmittel für den Elektrodenslurry werden unabhängig voneinander ein oder mehrere Lösungsmittel, bevorzugt Lösungsmittel mit hohem Siedepunkt, bevorzugter ausgewählt aus der Gruppe bestehend aus *N*-Methyl-2-pyrrolidon, Wasser, Dimethylsulfoxid, Ethylencarbonat, Propylencarbonat, Dimethylcarbonat, Methylethylcarbonat, $\gamma$-Butyrolacton, Tetrahydrofuran, Dioxolan, Sulfolan, *N,N'*-Dimethylformamid, *N,N'*-Dimethylacetamid, verwendet. Die Konzentration des redoxaktiven Materials, insbesondere des erfindungsgemäßen Polymers, zur Speicherung elektrischer Energie im oben genannten Elektrodenslurry beträgt bevorzugt zwischen 0.1 und 10 mg/ml, besonders bevorzugt zwischen 0.5 und 5 mg/ml.

Wird das Polymer dieser Erfindung als redoxaktives Material für elektrische Ladungsspeicher als positives Elektrodenelement verwendet, so wird als redoxaktives Material zur elektrischen Ladungsspeicherung in der negativen Elektrode ein Material verwendet, welches eine Redoxreaktion bei einem niedrigeren elektrochemischen Potential als das Polymer dieser Erfindung zeigt. Bevorzugt sind solche Materialien ausgewählt aus der Gruppe bestehend aus Kohlenstoffmaterialien, die insbesondere aus der Gruppe bestehend aus Graphit, Graphen, Ruß, Kohlenstofffasern, Kohlenstoffnanoröhren ausgewählt sind, Metalle oder Legierungen, die insbesondere aus der Gruppe bestehend aus Lithium, Natrium, Magnesium, Lithium-Aluminium, Li-Si, Li-Sn, Li-Ti, Si, SiO, $SiO_2$, Si-$SiO_2$-Komplex, Zn, Sn, SnO, $SnO_2$, PbO, $PbO_2$, GeO, $GeO_2$, $WO_2$, $MoO_2$, $Fe_2O_3$, $Nb_2O_5$, $TiO_2$, $Li_4Ti_5O_{12}$, und $Li_2Ti_3O_7$ ausgewählt sind, sowie organische redoxaktives Materialien. Beispiele organischer redoxaktiver Materialien sind Verbindungen mit einem stabilen organischen Radikal, Verbindungen mit einer Organoschwefeleinheit, mit einer Chinonstruktur, Verbindungen mit einem Dionsystem, konjugierte Carbonsäuren und deren Salze, Verbindungen mit einer Phtalimid- bzw. Naphtalimidstruktur, Verbindungen mit einer Disulfidverbindung sowie Verbindungen mit einer Phenanthrenstruktur und deren Derivate. Wird in der negativen Elektrode eine oben genannte redoxaktive oligomere oder polymere Verbindung eingesetzt, so kann diese Verbindung auch ein Komposit, also eine Zusammensetzung, sein, bestehend aus dieser oligomeren oder polymeren Verbindung, einem Leitfähigkeitsadditiv und einem Bindeadditiv in einem beliebigen Verhältnis. Das Leitfähigkeitsadditiv ist auch in diesem Fall insbesondere mindestens ein elektrisch leitendes Material, bevorzugt ausgewählt aus der Gruppe bestehend aus Kohlenstoffmaterialen, elektrisch leitenden Polymeren, insbesondere sind es Kohlenstoffmaterialien. Kohlenstoffmaterialien sind insbesondere aus der Gruppe bestehend aus Kohlenstofffasern, Kohlenstoffnanoröhren, Graphit, Ruß, Graphen ausgewählt, und sind besonders bevorzugt Kohlenstofffasern. Elektrisch leitende Polymere sind insbesondere aus der Gruppe bestehend aus Polyanilinen, Polythiophenen, Polyacetylenen, Poly(3,4-ethylendioxythiophen) polystyrensulfonat (= "PEDOT:PSS"), Polyarcene ausgewählt. Bindeadditive sind auch in diesem Fall insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylate, Polymethacrylate, Polysulfone, Cellulosederivate, Polyurethane.

Dieses Komposit kann wie oben beschrieben mit Hilfe eines Elektrodenslurrys durch ein bekanntes Verfahren zur Filmbildung als Schicht auf einem Substrat vorliegen.

## Abbildungen

Abbildung 1 (= Fig. 1) zeigt das Cyclovoltamogramm von **3** (1 mmolar in $CH_2Cl_2$ mit 0.1 M $TBAPF_6$) bei verschiedenen Messgeschwindigkeiten (angegeben in mV/s). Die x-Achse gibt das Potential V an, die y-Achse den Strom in mA an.

Abbildung 2 (= Fig. 2) zeigt das Cyclovoltamogramm von **5** (1 mmolar in $CH_2Cl_2$ mit 0.1 M $TBAClO_4$) bei verschiedenen Messgeschwindigkeiten (angegeben in mV/s). Die x-Achse gibt das Potential V an, die y-Achse den Strom in mA an.

Abbildung 3 (= Fig. 3) gibt die gemessenen Spannungen V (y-Achse) über der Kapazität (x-Achse) einer mit **4** hergestellten, erfindungsgemäßen Elektrode nach 1 bzw. 2 Lade- Entladezyklen an (Ladegeschwindigkeit = 1 C, das heißt volles Laden in 60 Minuten; Abschnitt 4.1). Die gefüllten Kästchen im Schaubild bezeichnen die Ladezyklen, die leeren die Entladezyklen.

Abbildung 4 (= Fig. 4) gibt die gemessenen Spannungen V (y-Achse) über der Kapazität (x-Achse) einer mit **13** hergestellten, nicht erfindungsgemäßen Elektrode nach 1 bzw. 2 bzw. 10 Lade-Entladezyklen an (Ladegeschwindigkeit = 1 C, das heißt volles Laden in 60 Minuten; Abschnitt 4.2). Die gefüllten Kästchen im Schaubild gehören zu den Ladezyklen, die leeren die Entladezyklen.

Abbildung 5 (= Fig. 5) gibt die gemessenen Spannungen V (y-Achse) über der Kapazität (x-Achse) einer mit **16** hergestellten, nicht erfindungsgemäßen Elektrode nach 1 bzw. 2 bzw. 10 Lade-Entladezyklen an (Ladegeschwindigkeit = 1 C, das heißt volles Laden in 60 Minuten; Abschnitt 4.3). Die gefüllten Kästchen im Schaubild gehören zu den Ladezyklen, die leeren die Entladezyklen.

Die Erfindung soll nachstehend anhand von in der Zeichnung dargestellten Ausführungsbeispielen zur Herstellung und Verwendung näher erläutert werden, ohne darauf beschränkt zu sein.

## Beispiele

1. Allgemeines

1.1 Abkürzungen

AIBN - Azobis(isobutyronitril); C - Kohlenstoffpartikel; DMAP - Dimethylaminopyridin; DMF - Dimethylformamid; DMSO - Dimethylsulfoxid; **G -** Grubbs-Katalysator (2nd); $NEt_3$ - Triethylamin; ov - über Nacht; $TBAClO_4$ - Tetrabutylammoniumperchlorat; $TBAPF_6$ - Tetrabutylammoniumhexafluorophosphat; THF - Tetrahydrofuran; Tol. - Toluol; TosCl - Toluensulfonylchlorid.

1.2 Meßmethoden

$^1H$ und $^{13}C$ NMR Spektren wurden mit einem Bruker AC 300 (300 MHz) Spektrometer bei 298 K aufgenommen. Für Cyclovoltammetrie und galvinostatische Experimente stand ein Biologic VMP 3 Potentiostat zur Verfügung. Größenausschlusschromatographie wurde an einem Agilent 1200 series System (Entgaser: PSS, Pumpe: G1310A, Autosampier: G1329A, Oven: Techlab, DAD Detector: G1315D, RI Detector: G1362A, Eluent: DMAc + 0.21% LiCl, 1 ml/min, Temperatur: 40 °C, Säule: PSS GRAM guard/1000/30 Å) durchgeführt.

2. Erfinderische Beispiele

2.1 **E1**: Synthese und Polymerisation von

5-((2,5-Di-*tert*-butyl-4-methoxyphenoxy)methyl)bicyclo[2.2.1]hept-2-en **3**

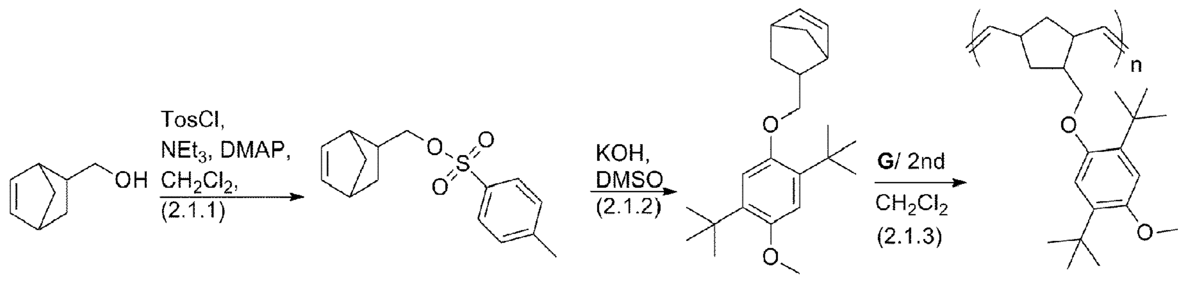


**1** **2** **3** **4**

2.1.1 Synthese von Bicyclo[2.2.1]hept-5-en-2-ylmethyl-4-methylbenzensulfonat **2**

5-Norbornen-2-methanol **1** (4.4 g, 35.5 mmol) und *p*-Toluensulfonylchlorid (10.1 g, 53 mmol) wurden in 20 mL $CH_2Cl_2$ gelöst. Die Lösung wurde auf 0 °C gekühlt und 7.4 mL (53 mmol) Triethylamin zugetropft. Nach vollständiger Zugabe wurde das Eisbad entfernt und die Reaktionsmischung für 14 Stunden gerührt. Die Reaktionslösung wurde anschließend mit Wasser gequencht und mit $CH_2Cl_2$ extrahiert. Die organische Phase wurde mit destilliertem Wasser gewaschen und über Magnesiumsulfat getrocknet, das Lösungsmittel im Vakuum entfernt und der Rückstand mittels Säulenchromatographie (Silicagel, Toluol/n-Hexan 3/1) gereinigt. Es wurden 6.8 g (69%) eines farblosen Öls **2** erhalten.

$^1H$ NMR ($CDCl_3$, 300 MHz, ppm): 7.77 (d, 2H), 7.34 (d, 2H), 6.00 - 6.11 (m, 1.3 H), 5.57 (m, 0.7H), 3.44 - 4.10 (m, 2H), 2.75 (m 1.7H), 2.58 (m, 0.3H), 2.49 (m, 2H), 2.42 (s, 3H), 2.33 (m, 1 H), 1.52 - 1.70 (m, 1 H), 1.06 - 1.33 (m, 1.3H), 0.4 (m, 0.7H).

2.1.2 Synthese von 5-((2,5-Di-*tert*-butyl-4-methoxyphenoxy)methyl)bicyclo[2.2.1]hept-2-en **3**

KOH (473.5 mg, 8.44 mmol) wurde in 10 mL DMSO suspendiert und mit Argon entgast. Danach wurden 2,5-Di-*tert*-butyl-4-methoxyphenol (0.5 g, 2.11 mmol) und Bicyclo[2.2.1]hept-5-en-2-ylmethylbenzensulfonat **2** (880 mg, 3.17 mmol) zugegeben. Die Reaktionsmischung wurde für 14 Stunden bei 50 °C gerührt. Anschließend wurde die Reaktionslösung mit Wasser gequencht und mit $CH_2Cl_2$ extrahiert. Die organische Phase wurde mit destilliertem Wasser neutral gewaschen und über Magnesiumsulfat getrocknet. Das Lösungsmittel wurde im Vakuum entfernt und der Rückstand mittels Säulenchromatographie (Silicagel, Chloroform/ *n*-Hexan 1/1) gereinigt. Es wurden 542 mg (75%) eines weißen Feststoffes **3** isoliert.
$^1H$ NMR ($CDCl_3$, 300 MHz, ppm): δ 6.61 - 6.80 (m, 2H), 5.89 - 6.13 (m, 2H), 3.82 - 3.94 (m, 0.8H), 3.73 (s, 3H), 3.58 - 3.65 (m, 0.6H), 3.38 - 3.47 (m, 0.6H), 3.03 (m, 0.6H), 2.74 - 2.87 (m, 1.4H), 2.45 - 2.59 (m, 0.6H), 1.79 - 1.93 (m, 1 H), 1.17 - 1.47 (m, 20.8H), 0.54 - 0.62 (0.6H).

2.1.3 Polymerisation von 5-((2,5-Di-*tert*-butyl-4-methoxyphenoxy)methyl)bicyclo[2.2.1]hept-2-en **3** zu **4**

Zu einer 0.5 M Lösung von 5-((2,5-Di-*tert*-butyl-4-methoxyphenoxy)methyl)bicyclo[2.2.1]hept-2-en **3** (80 mg, 0.234 mmol) in $CH_2Cl_2$ wurde Grubbs-Katalysator 2$^{nd}$ Generation (3.96 mg, 0.00467 mmol) gegeben und für 14 Stunden bei Raumtemperatur gerührt. Danach wurde mit 50 µl Ethylvinylether gequencht und das Polymer in Methanol gefällt. Man erhält 62 mg (78%) eines grau-weißen Polymers.

2.2 **E2:** Synthese und Polymerisation von

5,5'-(2,5-Di-*tert*-butyl-1,4-phenylen)bis(oxy)bis(methylen)bis(bicyclo[2.2.1]hept-2-en) **5**

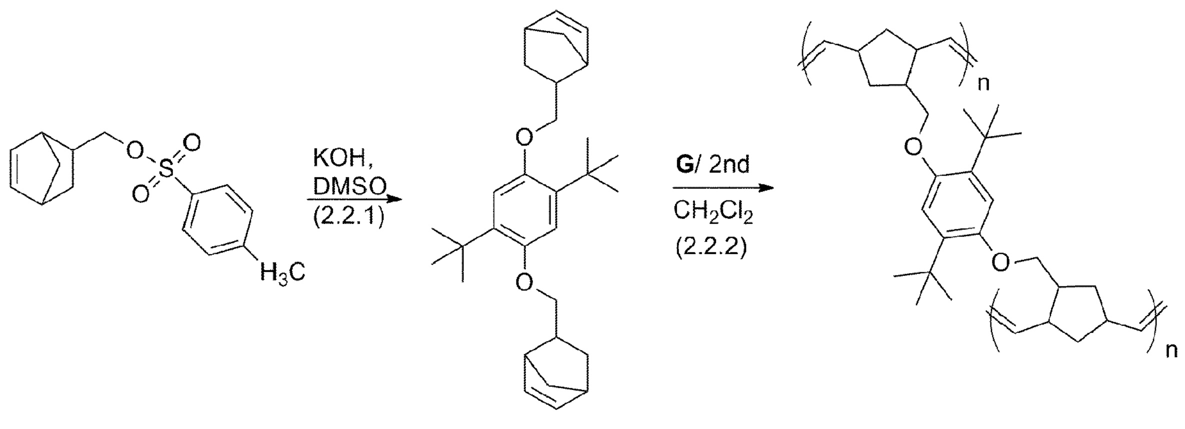


**2** **5** **6**

2.2.1 Synthese von

5,5'-(2,5-Di-*tert*-butyl-1,4-phenylen)bis(oxy)bis(methylen)bis(bicyclo[2.2.1]hept-2-en) **5**

KOH (1 g, 17.98 mmol) wurde in 15 mL DMSO suspendiert und mit Argon entgast. Danach wurden 2,5-Di-*tert*-butyl-hydrochinon (0.5 g, 2.25 mmol) und Bicyclo[2.2.1]hept-5-en-2-ylmethylbenzensulfonat **2** (1.885 g, 6.75 mmol) in 5 ml DMSO gelöst und zugegeben. Die Reaktionsmischung wurde für 14 Stunden bei 50 °C gerührt. Anschließend wurde die Reaktionslösung mit Wasser gequencht und mit $CH_2Cl_2$ extrahiert. Die organische Phase wurde mit destilliertem Wasser neutral gewaschen und über Magnesiumsulfat getrocknet. Das Lösungsmittel wurde im Vakuum entfernt und der Rückstand mittels Säulenchromatographie (Silicagel, Diethylether / *n*-Hexan 1/9) gereinigt. Es wurden 586 mg (60%) eines weißen Feststoffes isoliert.
$^1H$ NMR ($CDCl_3$, 300 MHz, ppm): 7.61 - 7.72 (m, 2H), 7.34 (d, 2H), 5.89 - 6.12 (m, 4H), 5.57 (m, 0.7H), 3.38 - 3.93 (m,

4H), 3.05 (m 0.7H), 2.8 (m, 3.3H), 1.82 (m, 2H), 1.52 - 1.70 (m, 1H), 1.19 - 1.40 (m, 25H).

2.2.2 Polymerisation von

5.5'-(((2,5-Di-*tert*-butyl-1,4-phenylen)bis(oxy)bis(methylen)bis(bicyclo[2.2.1]hept-2-en **5** zu **6**

Zu einer 0.5 M Lösung von 5,5'-(((2,5-Di-tert-butyl-1,4-phenylen)bis(oxy)bis(methylen)-bis(bicyclo[2.2.1]hept-2-en **5** (80 mg, 0.184 mmol) in $CH_2Cl_2$ wurde Grubbs Katalysator 2$^{nd}$ Generation (3.1 mg, 0.00368 mmol) gegeben und für 1 Stunden bei Raumtemperatur gerührt. Danach wurde mit 50 $\mu$l Ethylvinylether gequencht und das Gel in Diethylether gefällt. Man erhielt 73 mg (91%) eines grau-weißen Polymers.

3. Vergleichsbeispiele

3.1 **V1:** Synthese und Polymerisation von

((2,5-Di-*tert*-butyl-1,4-phenylen)bis(oxy))bis(propan-3,1-diyl)-bis(2-methylacrylat) **12**

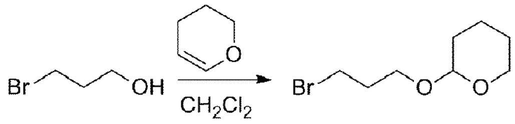


9 10

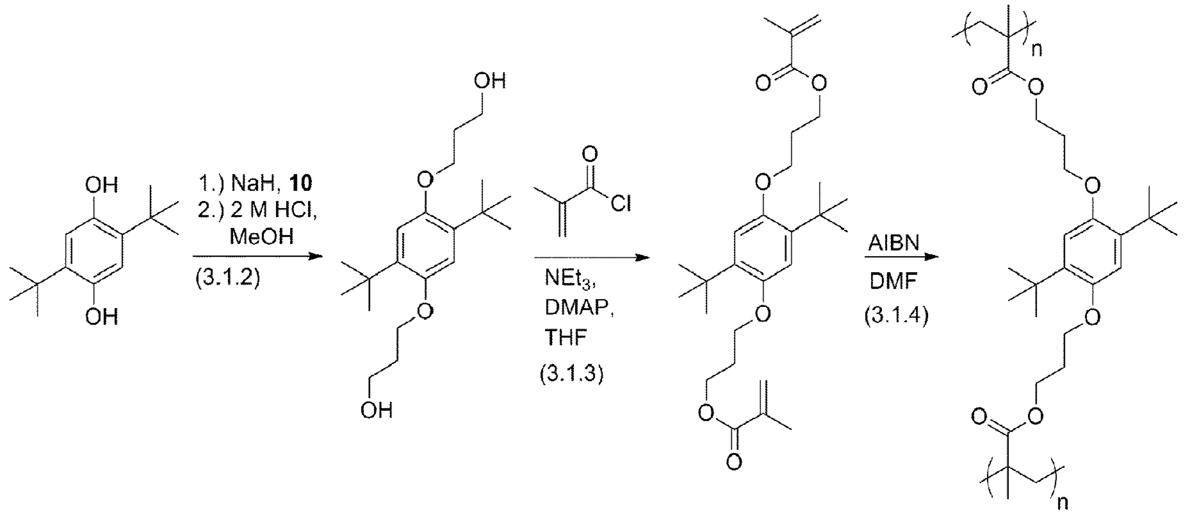


7 11 12 13

3.1.1 Synthese von 2-(3-Bromopropoxy)tetrahydro-2H-pyran **10**

In eine 0.5 M Lösung von 1-Brom-3-hydroxypropan **9** (10 g, 72 mmol) in $CH_2Cl_2$ wurden *p*-Toluolsulfonsäure-hydrat (1.37 g, 7.2 mmol) sowie Dihydropyran (9.8 mL, 107.9 mmol) gegeben und für 16 Stunden bei Raumtemperatur gerührt. Die Reaktion wurde mit Wasser extrahiert. Die organische Phase wurde mit $MgSO_4$ getrocknet, das Lösungsmittel im Vakuum entfernt und der Rückstand mittels Vakuumdestillation gereinigt. Es wurden 12.2 g (54.7 mmol, 76%) **10** als farbloses Öl erhalten.

$^1H$ NMR ($CDCl_3$, 300 MHz, ppm): $\delta$ 4.52 (s, 1 H), 3.78 (m, 2H), 3.46 (m, 4H), 2.05 (m, 2H), 1.68 (m, 2H), 1.46 (m, 4H).

3.1.2 Synthese von 3,3'-((2,5-Di-*tert*-butyl-1,4-phenylen)bis(oxy))bis(propan-1-ol) **11**

Zu einer 0.9 M Lösung von **7** (1 g, 4.5 mmol) in THF wurde eine eisgekühlte Suspension von NaH (450 mg, 11.2 mmol, 60% Dispersion in Mineralöl) in 10 mL THF getropft und nach vollständiger Zugabe noch 2 Stunden bei

Raumtemperatur gerührt. Anschließend wurde **10** (5.02 g, 22.5 mmol) zugegeben und die Reaktionsmischung für 24 Stunden bei 50 °C gerührt. Die Reaktion wurde mit Wasser gequencht und mit Dichlormethan extrahiert. Die organische Phase wurde mit $MgSO_4$ getrocknet und das Lösungsmittel im Vakuum entfernt. Ohne weitere Aufreinigung wurde der Rückstand in 50 mL Methanol aufgenommen und 20 mL 2 M HCl hinzugegeben. Nach Abspaltung der Schutzgruppe (DC-Kontrolle) wurde das Produkt mit Dichlormethan extrahiert, über $MgSO_4$ getrocknet und das Lösungsmittel im Vakuum entfernt. Der Rückstand wurde mittels Säulenchromatographie (Silicagel, Hexan/Ethylacetat, 1:1) gereinigt. Es wurden 853 mg (2.5 mmol, 56%) **11** als weißer Feststoff erhalten.

$^1H$ NMR ($CDCl_3$, 300 MHz, ppm): δ 6.85 (s, 2H), 4.10 (t, 4H), 3.92 (t, 4H), 2.09 (m, 4H), 1.37 (s, 18H).

3.1.3 Synthese von

((2,5-Di-*tert*-butyl-1,4-phenylen)bis(oxy))bis(propan-3,1-diyl)-bis(2-methylacrylat) **12**

**11** (505 mg, 1.5 mmol) und DMAP (18 mg, 0.15 mmol) wurden inertisiert. Es wurden 10 mL trockenes THF, Triethylamin (820 μL, 5.9 mmol) und Methacryloylchlorid (570 μl, 5.9 mmol) unter Kühlung zugegeben und für 16 Stunden bei Raumtemperatur gerührt. Die Reaktion wurde mit Wasser gequencht und mit Dichlormethan extrahiert. Die organische Phase wurde mit $MgSO_4$ getrocknet und das Lösungsmittel im Vakuum entfernt. Der Rückstand wurde mittels Säulenchromatographie (Silicagel, Hexan/Ethylacetat, 4:1) gereinigt. Es wurden 565 mg (1.2 mmol, 80.6%) **12** als weißer Feststoff erhalten.

$^1H$ NMR ($CDCl_3$, 300 MHz, ppm): δ 6.83 (s, 2H), 6.12 (s, 2H), 5.56 (s, 2H), 4.39 (t, 4H), 4.07 (t, 4H), 2.21 (m, 4H), 1.95 (s, 6H), 1.37 (s, 18H).

3.1.4 Polymerisation von

((2,5-Di-*tert*-butyl-1,4-phenylen)bis(oxy))bis(propan-3,1-diyl)-bis(2-methylacrylat) **12** zu **13**

Eine 0.5 M Lösung von **12** (100 mg, 0.210 mmol) in trockenem DMF und AIBN (1.72 mg, 0.011 mmol) wurden für 90 min mit Argon entgast. Die entgaste Lösung rührte für 16 Stunden bei 80 °C. Das Polymer wurde in Methanol gefällt und gewaschen. Dabei wurden 65 mg (0.178 mmol, 84.3 %) **13** als weißer Feststoff erhalten.

3.2 **V2:** Synthese und Polymerisation von

3-(2,5-Di-*tert*-butyl-4-methoxyphenoxy)propylmethacrylat **15**

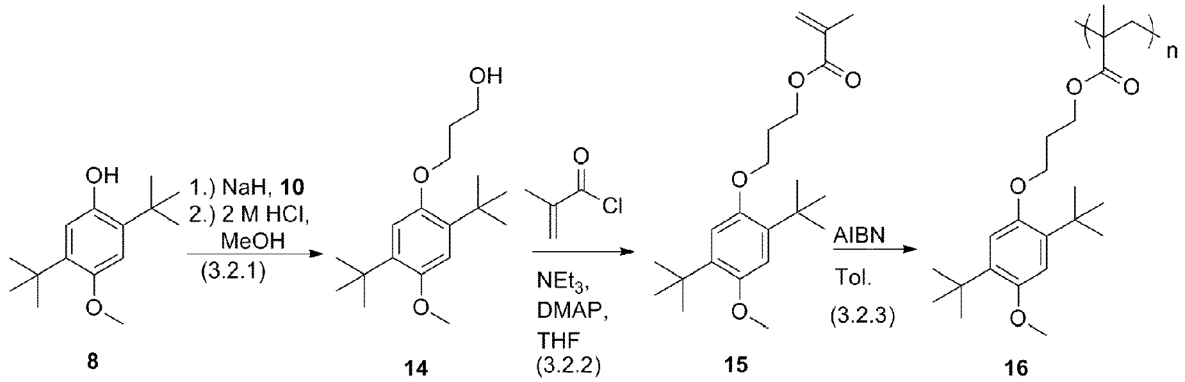


**8** **14** **15** **16**

3.2.1 Synthese von 3-(2,5-Di-*tert*-butyl-4-methoxyphenoxy)propan-1-ol **14**

Eine 0.8 M Lösung von **8** (2 g, 8.5 mmol) in THF wurde in eine eisgekühlte Suspension von NaH (507 mg, 12.7 mmol, 60% Dispersion in Mineralöl) in 10 mL THF getropft und nach vollständiger Zugabe noch 2 Stunden bei Raumtemperatur gerührt. Anschließend wurde **10** (5.66 g, 25.4 mmol) zugegeben und die Reaktionsmischung für 48 Stunden bei 50 °C gerührt. Die Reaktion wurde mit Wasser gequencht und mit Dichlormethan extrahiert. Die organische Phase wurde mit $MgSO_4$ getrocknet und das Lösungsmittel wurde im Vakuum entfernt. Der Rückstand wurde in 50 mL Methanol aufgenommen und 20 mL 2 M HCl hinzugegeben. Nach erfolgreicher Abspaltung der Schutzgruppe wurde das Produkt

mit Dichlormethan extrahiert, über $MgSO_4$ getrocknet und das Lösungsmittel im Vakuum entfernt. Der Rückstand wurde mittels Gelfiltration (Silicagel, *n*-Hexan/Ethylacetat, 4:1) gereinigt. Es wurden 1.62 g (5.5 mmol, 65%) **14** als weißer Feststoff erhalten.

$^1H$ NMR ($CDCl_3$, 300 MHz, ppm): δ 6.84 (2H), 4.11 (t, 2H), 3.92 (t, 2H), 3.81 (s, 3H), 2.09 (m, 2H), 1.37 (18H).

3.2.2 Synthese von 3-(2,5-Di-*tert*-butyl-4-methoxyphenoxy)propylmethacrylat **15**

**14** (500 mg, 1.7 mmol) und DMAP (20.8 mg, 0.17 mmol) wurden inertisiert. Es wurden 10 mL trockenes THF, Triethylamin (940 μl, 6.8 mmol) und Methacryloylchlorid (660 μl, 6.8 mmol) unter Kühlung hinzugegeben und für 16 Stunden bei Raumtemperatur gerührt. Die Reaktion wurde mit Wasser gequencht und mit Dichlormethan extrahiert. Die organische Phase wurde mit $MgSO_4$ getrocknet und das Lösungsmittel im Vakuum entfernt. Der Rückstand wurde mittels Säulenchromatographie (Silicagel, *n*-Hexan/Ethylacetat, 4:1) gereinigt. Es wurden 545 mg (1.5 mmol, 88.5%) **15** als weißer Feststoff erhalten.

$^1H$ NMR ($CDCl_3$, 300 MHz, ppm): δ 6.83 (2H), 6.12 (s, 1 H), 5.56 (s, 1 H), 4.39 (t, 2H), 4.07 (t, 2H), 3.80 (s, 3H), 2.21 (m, 2H), 1.95 (s, 3H), 1.36 (18H).

3.2.3 Polymerisation von 3-(2,5-Di-*tert*-butyl-4-methoxyphenoxy)propylmethacrylat **15** zu **16**

Eine 0.5 M Lösung von **15** (100 mg, 0.275 mmol) in trockenem Toluol und AIBN (1.72 mg, 0.13 mmol) wurden für 90 min mit Argon entgast. Die entgaste Lösung rührte für 16 Stunden bei 80 °C. Das Polymer wurde in Methanol ausgefällt. Dabei wurden 65 mg (0.18 mmol, 64.5%) **16** als weißer Feststoff erhalten.

4. Herstellung der Elektroden

4.1 Herstellung einer Elektrode mit **4** (erfindungsgemäßes Beispiel)

**4** (hergestellt wie in Abschnitt 2.1.3 beschrieben) wurde im Mörser zu einem feinen Pulver verarbeitet. Anschließend wurde zu 5 mg **4** und 5 mg Poly(vinylidenfluorid) (PVDF; Sigma Aldrich als Bindeadditiv) 0.5 mL NMP (*N*-Methyl-2-pyrrolidon) gegeben und für 4 h gerührt. Diese Lösung wurde zu 40 mg Super P® (Sigma-Aldrich, als Leitaddiv) gegeben und es wurde in einem Mörser zehn Minuten durchmischt, bis eine homogene Paste entstand. Diese wurde auf eine Aluminiumfolie (15 μm, MIT Corporation) aufgebracht. Die entstandene Elektrode wurde für 16 Stunden bei 45 °C im Vakuum getrocknet. Der Anteil des aktiven Materials auf den Elektroden wurde auf Basis der Massen von getrockneten Elektroden bestimmt. Die Konstruktion der Knopfzellen (Typ 2032) erfolgte unter Argonatmosphäre. Mit Hilfe eines MIT Corporation Precision Disc Cutter wurden geeignete Elektroden ausgestanzt (15 mm Durchmesser). Die als Kathode zum Einsatz kommende Elektrode wurde auf den Boden der Knopfzelle platziert und mit Hilfe einer porösen Polypropylen Membran (Celgard, MIT Corporation) von der Lithiumanode getrennt. Auf der Lithium Anode wurden anschließend ein rostfreies Stahlgewicht (Durchmesser: 15.5 mm, Dicke: 0.3 mm, MIT Corporation) und eine rostfreie Stahlfeder (Durchmesser: 14.5 mm, Dicke: 5 mm) platziert. Die Knopfzelle wurde mit Elektrolyt (EC/DMC 3/7, 0.5 M $LiClO_4$) gefüllt und mit dem Deckel abgedichtet bevor sie mit einer elektrischen Pressmaschine (MIT Corporation MSK-100D) versiegelt wurde.
Im ersten Entladezyklus zeigt die Batterie eine Kapazität von 46 mAh/g (59% der theoretisch möglichen Kapazität), nach 2 Lade/Entladezyklen zeigt die Batterie eine Kapazität von über 56 mAh/g (Abbildung 3).

4.2 Herstellung einer Elektrode mit **13** (Vergleichsbeispiel)

**13** (hergestellt wie in Abschnitt 3.1.4 beschrieben) wurde im Mörser zu einem feinen Pulver verarbeitet. Anschließend wurde zu 15 mg **13** und 5 mg Poly(vinylidenfluorid) (PVDF; Sigma Aldrich als Bindeadditiv) 0.5 mL NMP (*N*-Methyl-2-pyrrolidon) gegeben und für 4 h gerührt. Diese Lösung wurde zu 30 mg Super P® (Sigma-Aldrich, als Leitadditiv) gegeben und es wurde in einem Mörser zehn Minuten durchmischt, bis eine homogene Paste entstand. Diese wurde auf eine Aluminiumfolie (15 μm, MIT Corporation) aufgebracht. Die entstandene Elektrode wurde für 16 Stunden bei 45 °C im Vakuum getrocknet. Der Anteil des aktiven Materials auf den Elektroden wurde auf Basis der Massen von getrockneten Elektroden bestimmt. Die Konstruktion der Knopfzellen (Typ 2032) erfolgte unter Argonatmosphäre. Mit Hilfe eines MIT Corporation Precision Disc Cutter wurden geeignete Elektroden ausgestanzt (15 mm Durchmesser). Die als Kathode zum Einsatz kommende Elektrode wurde auf den Boden der Knopfzelle platziert und mit Hilfe einer porösen Polypropylen Membran (Celgard, MIT Corporation) von der Lithiumanode getrennt. Auf der Lithium Anode wurden anschließend ein rostfreies Stahlgewicht (Durchmesser: 15.5 mm, Dicke: 0.3 mm, MIT Corporation) und eine rostfreie Stahlfeder (Durchmesser: 14.5 mm, Dicke: 5 mm) platziert. Die Knopfzelle wurde mit Elektrolyt (EC/DMC 3/7, 0.5 M $LiClO_4$) gefüllt und mit dem Deckel abgedichtet bevor sie mit einer elektrischen Pressmaschine

(MIT Corporation MSK-100D) versiegelt wurde.
Im ersten Entladezyklus zeigte die Batterie eine Kapazität von 34 mAh/g (60% der theoretisch möglichen Kapazität), nach 10 Lade/Entladezyklen (Ladegeschwindigkeit 1 C) zeigt die Batterie eine Kapazität von 24 mAh/g (Abbildung 4 = Fig. 4).

4.3 Herstellung einer Elektrode mit **16** (Verpleichsbeispiel)

**16** (hergestellt wie in Abschnitt 3.2.3 beschrieben) wurde im Mörser zu einem feinen Pulver verarbeitet. Anschließend wurde zu 5 mg **16** und 5 mg Poly(vinylidenfluorid) (PVDF; Sigma Aldrich als Bindeadditiv) 0.5 mL NMP (*N*-Methyl-2-pyrrolidon) gegeben und für 4 h gerührt. Diese Lösung wurde zu 40 mg Super P® (Sigma-Aldrich, als Leitadditiv) gegeben und es wurde in einem Mörser zehn Minuten durchmischt, bis eine homogene Paste entstand. Diese wurde auf eine Aluminiumfolie (15 $\mu$m, MIT Corporation) aufgebracht. Die entstandene Elektrode wurde für 16 Stunden bei 45 °C im Vakuum getrocknet. Der Anteil des aktiven Materials auf den Elektroden wurde auf Basis der Massen von getrockneten Elektroden bestimmt. Die Konstruktion der Knopfzellen (Typ 2032) erfolgte unter Argonatmosphäre. Mit Hilfe eines MIT Corporation Precision Disc Cutter wurden geeignete Elektroden ausgestanzt (15 mm Durchmesser). Die als Kathode zum Einsatz kommende Elektrode wurde auf den Boden der Knopfzelle platziert und mit Hilfe einer porösen Polypropylen Membran (Celgard, MIT Corporation) von der Lithiumanode getrennt. Auf der Lithium Anode wurden anschließend ein rostfreies Stahlgewicht (Durchmesser: 15.5 mm, Dicke: 0.3 mm, MIT Corporation) und eine rostfreie Stahlfeder (Durchmesser: 14.5 mm, Dicke: 5 mm) platziert. Die Knopfzelle wurde mit Elektrolyt (EC/DMC 3/7, 0.5 M $LiClO_4$) gefüllt und mit dem Deckel abgedichtet bevor sie mit einer elektrischen Pressmaschine (MIT Corporation MSK-100D) versiegelt wurde.
Im ersten Entladezyklus zeigte die Batterie eine Kapazität von 55 mAh/g (81% der theoretisch möglichen Kapazität), nach 10 Lade/Entladezyklen (Geschwindigkeit 1 C) zeigt die Batterie eine Kapazität von 41 mAh/g (Abbildung 5 = Fig. 5).

5. Ergebnisse

Die Batterien welche mit Elektroden aus erfindungsgemäßen Polymeren (Abschnitt 4.1, Abbildung 3) erhalten wurden, zeigen eine Entladekapazität nach dem zweiten Lade-/ Entladezyklus von 56 mAh/g. Dies ist deutlich höher als die Entladekapazität im zweiten Zyklus, die mit Batterien aus Elektroden aus Polymeren des Standes der Technik erreicht werden, nämlich weniger als 30 mAh/g im 2. Lade/- Entladezyklus und 24 mAh/g nach dem 10 Lade-/ Entladezyklus mit einer Batterie gemäß Abschnitt 4.2 und weniger als 50 mAh/g nach dem 2. Lade/- Entladezyklus mit einer Batterie gemäß Abschnitt 4.3 . Das erfindungsgemäße Polymer ermöglicht deshalb Batterien mit sowohl höherer Entladespannung, als auch höherer Entladekapazität nach Durchlaufen mehrerer Lade-/ Entladezyklen. Weiterhin konnten die erfindungsgemäßen Polymere aufwandgeringer hergestellt werden.

## Patentansprüche

1. Polymer umfassend $n^1$ miteinander verknüpfte Wiederholungseinheiten der chemischen Struktur (I) oder $n^2$ miteinander verknüpfte Wiederholungseinheiten der chemischen Struktur **(II)** mit

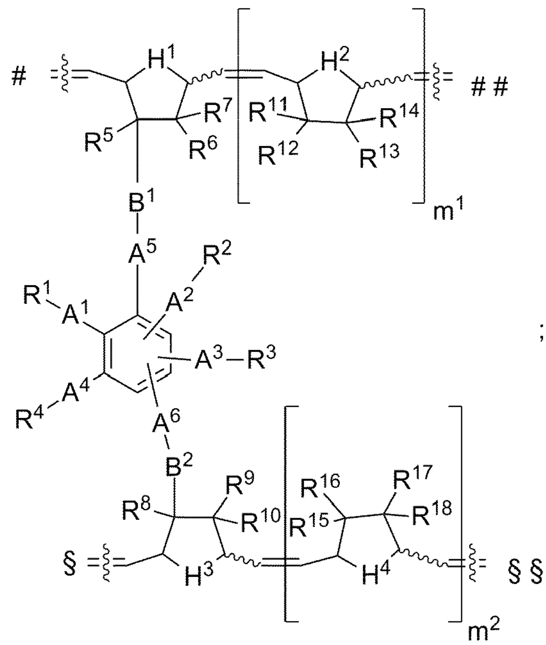
;
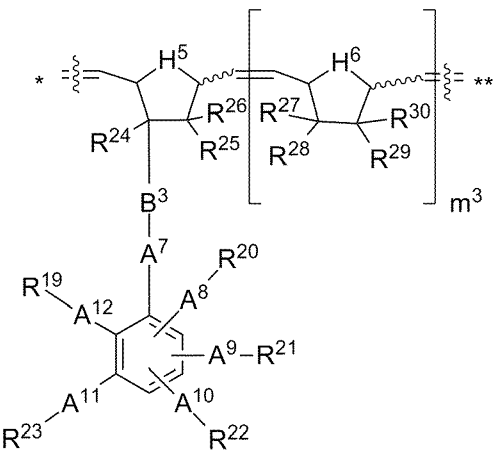
;

**(I)** **(II)**

wobei $n^1$ und $n^2$ unabhängig voneinander jeweils eine ganze Zahl $\geq 4$ sind,
wobei $m^1$, $m^2$, $m^3$ unabhängig voneinander jeweils eine ganze Zahl $\geq 0$ sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei $H^1$, $H^2$, $H^3$, $H^4$, $H^5$, $H^6$ unabhängig voneinander ausgewählt sind aus O, S, NR', CR''R''',
wobei die Reste R', R'', R''', $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{21}$, $R^{22}$, $R^{23}$, $R^{24}$, $R^{25}$, $R^{26}$, $R^{27}$, $R^{28}$, $R^{29}$, $R^{30}$ unabhängig voneinander jeweils aus der Gruppe bestehend aus

Wasserstoff, (hetero)aromatischer Rest,
gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest,

ausgewählt sind,
wobei mindestens zwei von $A^1$, $A^2$, $A^3$, $A^4$, $A^5$, $A^6$ jeweils für ein Sauerstoff- oder Schwefelatom stehen und die übrigen von $A^1$, $A^2$, $A^3$, $A^4$, $A^5$, $A^6$ jeweils für eine direkte Bindung stehen,
wobei mindestens zwei von $A^7$, $A^8$, $A^9$, $A^{10}$, $A^{11}$, $A^{12}$ jeweils für ein Sauerstoff- oder Schwefelatom stehen und die übrigen von $A^7$, $A^8$, $A^9$, $A^{10}$, $A^{11}$, $A^{12}$ jeweils für eine direkte Bindung stehen,
und wobei mindestens zwei in *ortho*-Stellung zueinander stehende Reste der Reste $R^1$, $R^2$, $R^3$, $R^4$ und/oder mindestens zwei in *ortho*-Stellung zueinander stehende Reste der Reste $R^{19}$, $R^{20}$, $R^{21}$, $R^{22}$, $R^{23}$ jeweils auch durch mindestens einen (hetero)aromatischen Ring oder gegebenenfalls mit mindestens einer Gruppe ausgewählt aus Nitrogruppe, $-NH_2$, -CN, -SH, -OH, Halogen, Alkylgruppe substituierten und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisenden aliphatischen Ring verbrückt sein können, und wobei der Rest $R^1$ im Falle dass $A^1$ = direkte Bindung, der Rest $R^2$ im Falle dass $A^2$ = direkte Bindung, der Rest $R^3$ im Falle dass $A^3$ = direkte Bindung, der Rest $R^4$ im Falle dass $A^4$ = direkte Bindung, der Rest $R^{19}$, im Falle dass $A^{12}$ = direkte Bindung, der Rest $R^{20}$, im Falle dass $A^8$ = direkte Bindung, der Rest $R^{21}$ im Falle dass $A^9$ = direkte Bindung, der Rest $R^{22}$ im Falle dass $A^{10}$ = direkte Bindung, der Rest $R^{23}$ im Falle dass $A^{11}$ = direkte Bindung sowie die Reste R", R"', $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{24}$, $R^{25}$, $R^{26}$, $R^{27}$, $R^{28}$, $R^{29}$, $R^{30}$ jeweils auch aus der Gruppe bestehend aus

Nitrogruppe, -CN, -F, -Cl, -Br, -I, $-COOR^{36}$, $-C(=O)NHR^{37}$, $-NR^{38}R^{39}$, wobei $R^{36}$, $R^{37}$, $R^{38}$, $R^{39}$ unabhängig voneinander jeweils ausgewählt aus der Gruppe bestehend aus Wasserstoff, (hetero)aromatischer Rest, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest,

ausgewählt sein können,
und wobei die Reste R"', $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{24}$, $R^{25}$, $R^{26}$, $R^{27}$, $R^{28}$, $R^{29}$, $R^{30}$ unabhängig voneinander auch ein Rest der Formel $-O-R^{40}$, wobei $R^{40}$ ein gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest ist, sein können,
wobei $B^1$ im Falle dass $A^5$ = O oder S, $B^2$ im Falle dass $A^6$ = O oder S, $B^3$ im Falle dass $A^7$ = O oder S unabhängig voneinander aus der Gruppe bestehend aus

direkte Bindung,

$$\&-(X^1)_{p1}-[C=X^2]_{p2}-(X^3)_{p3}-B^5-(Y^2)_{q2}-[C=Y^1]_{q1}-\&\&,$$

$$\&-(Y^3)_{q3}-(C=Y^4)-\&\&,$$

ausgewählt sind,
und wobei $B^1$ im Falle dass $A^5$ = direkte Bindung, $B^2$ im Falle dass $A^6$ = direkte Bindung, $B^3$ im Falle dass $A^7$ = direkte Bindung unabhängig voneinander aus der Gruppe bestehend aus

$$\&-(X^4)_{p4}-[C=X^5]_{p5}-(X^6)_{p6}-B^6-(Y^7)_{q6}-[C=Y^6]_{q5}-(Y^5)_{q4}-\&\&,$$

$$\&-(Y^{10})_{q9}-(C=Y^9)_{q8}-(Y^8)_{q7}-\&\&,$$

wobei p1, p2, p3 jeweils 0 oder 1 mit der Maßgabe, dass nicht gleichzeitig p1 = p3 = 1 und p2 = 0 ist, sind,
wobei p4, p5, p6 jeweils 0 oder 1 mit der Maßgabe, dass nicht gleichzeitig p4 = p6 = 1 und p5 = 0 ist, sind,
wobei q1, q2 jeweils 0 oder 1 sind, wobei wenn q1 = 0, dann q2 = 0,
wobei q3 = 0 oder 1 ist,
wobei q4, q5, q6 jeweils 0 oder 1 mit der Maßgabe, dass nicht gleichzeitig q4 = q6 = 1 und q5 = 0 ist, sind,
wobei q7, q8, q9 jeweils 0 oder 1 mit der Maßgabe, dass nicht gleichzeitig q7 = q9 = 1 und q8 = 0 ist, und dass wenn q7 = 1 und q8 = 0, dann q9 = 0 ist,
wobei $X^2$, $X^5$, $Y^1$, $Y^4$, $Y^6$, $Y^9$ unabhängig voneinander ausgewählt aus der Gruppe bestehend aus Sauerstoff, Schwefel sind,
wobei $X^1$, $X^3$, $X^4$, $X^6$, $Y^2$, $Y^3$, $Y^7$, $Y^{10}$ unabhängig voneinander ausgewählt aus der Gruppe bestehend aus O, S, NH, N-Alkyl sind,
wobei $Y^5$, $Y^8$ aus NH, N-Alkyl ausgewählt ist,

wobei $B^5$, $B^6$ unabhängig voneinander ausgewählt aus der Gruppe bestehend aus zweiwertiger (hetero)aromatischer Rest,
zweiwertiger, gegebenenfalls mit mindestens einer Gruppe ausgewählt aus Nitrogruppe,$-NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest sind,

ausgewählt sind,
und wobei "&&" für $B^1$ die zu $A^5$ weisende Bindung bezeichnet, für $B^2$ die zu $A^6$ weisende Bindung bezeichnet, für $B^3$ die zu $A^7$ weisende Bindung bezeichnet,
und wobei "&" für $B^1$ die zu $R^5$ weisende Bindung bezeichnet, für $B^2$ die zu $R^8$ weisende Bindung bezeichnet, für $B^3$ die zu $R^{24}$ weisende Bindung bezeichnet.

**2.** Polymer nach Anspruch 1, umfassend $n^1$ miteinander verknüpfte Wiederholungseinheiten der chemischen Struktur **(I)** oder $n^2$ miteinander verknüpfte Wiederholungseinheiten der chemischen Struktur **(II)** mit

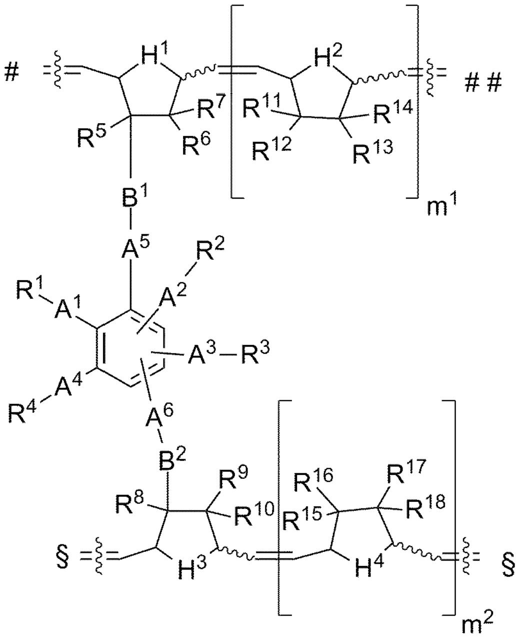
;
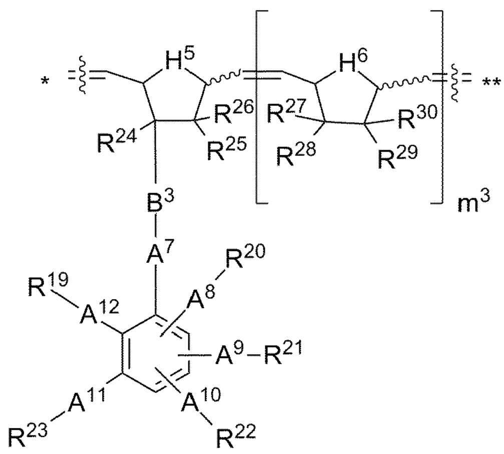
;

**(I)** **(II)**

wobei $n^1$ und $n^2$ unabhängig voneinander jeweils eine ganze Zahl $\geq 4$, insbesondere $\geq 4$ und $\leq 5000$, sind,
wobei $m^1$, $m^2$, $m^3$ unabhängig voneinander jeweils eine ganze Zahl $\geq 0$, insbesondere $\geq 0$ und $\leq 5000$, sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei $H^1$, $H^2$, $H^3$, $H^4$, $H^5$, $H^6$ unabhängig voneinander ausgewählt sind aus O, CR"R"',

wobei die Reste R", R"', $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{21}$, $R^{22}$, $R^{23}$, $R^{24}$, $R^{25}$, $R^{26}$, $R^{27}$, $R^{28}$, $R^{29}$, $R^{30}$ unabhängig voneinander jeweils aus der Gruppe bestehend aus

Wasserstoff, Phenyl, Benzyl,
gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest,

ausgewählt sind,
und wobei die Reste $R^{11}$, $R^{13}$, $R^{15}$, $R^{17}$ unabhängig voneinander jeweils auch eine Gruppe der allgemeinen Struktur **(III)** mit

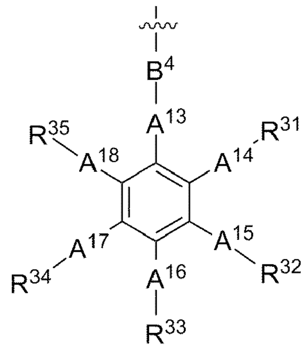 ;

**(III)**

worin die Reste $R^{31}$, $R^{32}$, $R^{33}$, $R^{34}$, $R^{35}$ unabhängig voneinander die für $R^1$ angegebene Bedeutung haben und sein können,
wobei mindestens zwei von $A^1$, $A^2$, $A^3$, $A^4$, $A^5$, $A^6$ jeweils für ein Sauerstoff- oder Schwefelatom, insbesondere ein Sauerstoffatom, stehen und die übrigen von $A^1$, $A^2$, $A^3$, $A^4$, $A^5$, $A^6$ jeweils für eine direkte Bindung stehen,
wobei mindestens zwei von $A^7$, $A^8$, $A^9$, $A^{10}$, $A^{11}$, $A^{12}$ jeweils für ein Sauerstoff- oder Schwefelatom, insbesondere ein Sauerstoffatom, stehen und die übrigen von $A^7$, $A^8$, $A^9$, $A^{10}$, $A^{11}$, $A^{12}$ jeweils für eine direkte Bindung stehen,
wobei mindestens zwei von $A^{13}$, $A^{14}$, $A^{15}$, $A^{16}$, $A^{17}$, $A^{18}$ jeweils für ein Sauerstoff- oder Schwefelatom, insbesondere ein Sauerstoffatom, stehen und die übrigen von $A^{13}$, $A^{14}$, $A^{15}$, $A^{16}$, $A^{17}$, $A^{18}$ jeweils für eine direkte Bindung stehen,
und wobei mindestens zwei in *ortho*-Stellung zueinander stehende Reste der Reste $R^1$, $R^2$, $R^3$, $R^4$ und/oder mindestens zwei in *ortho*-Stellung zueinander stehende Reste der Reste $R^{19}$, $R^{20}$, $R^{21}$, $R^{22}$, $R^{23}$ und/oder mindestens zwei in *ortho*-Stellung zueinander stehende Reste der Reste $R^{31}$, $R^{32}$, $R^{33}$, $R^{34}$, $R^{35}$ jeweils auch durch mindestens einen (hetero)aromatischen Ring oder gegebenenfalls mit mindestens einer Gruppe ausgewählt aus Nitrogruppe, $-NH_2$, -CN, -SH, -OH, Halogen, Alkylgruppe substituierten und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisenden aliphatischen Ring verbrückt sein können,
und wobei der Rest $R^1$ im Falle dass $A^1$ = direkte Bindung, der Rest $R^2$ im Falle dass $A^2$ = direkte Bindung, der Rest $R^3$ im Falle dass $A^3$ = direkte Bindung, der Rest $R^4$ im Falle dass $A^4$ = direkte Bindung, der Rest $R^{19}$ im Falle dass $A^{12}$ = direkte Bindung, der Rest $R^{20}$, im Falle dass $A^8$ = direkte Bindung, der Rest $R^{21}$ im Falle dass $A^9$ = direkte Bindung, der Rest $R^{22}$ im Falle dass $A^{10}$ = direkte Bindung, der Rest $R^{23}$ im Falle dass $A^{11}$ = direkte Bindung, der Rest $R^{31}$ im Falle dass $A^{14}$ = direkte Bindung, der Rest $R^{32}$ im Falle dass $A^{15}$ = direkte Bindung, der Rest $R^{33}$ im Falle dass $A^{16}$ = direkte Bindung, der Rest $R^{34}$ im Falle dass $A^{17}$ = direkte Bindung, der Rest $R^{35}$ im Falle dass $A^{18}$ = direkte Bindung sowie die Reste R", R"', $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{24}$, $R^{25}$, $R^{26}$, $R^{27}$, $R^{28}$, $R^{29}$, $R^{30}$ jeweils auch aus der Gruppe bestehend aus

Nitrogruppe, -CN, -F, -Cl, -Br, -I, $-COOR^{36}$, $-C(=O)NHR^{37}$, $-NR^{38}R^{39}$, wobei $R^{36}$, $R^{37}$, $R^{38}$, $R^{39}$ unabhängig voneinander jeweils ausgewählt aus der Gruppe bestehend aus Wasserstoff, (hetero)aromatischer Rest, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest ist,

ausgewählt sein können,
und wobei die Reste R''', $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{24}$, $R^{25}$, $R^{26}$, $R^{27}$, $R^{28}$, $R^{29}$, $R^{30}$ unabhängig voneinander auch ein Rest der Formel -O-$R^{40}$, wobei $R^{40}$ ein gegebenenfalls mit mindestens einer Gruppe ausgewählt aus Nitrogruppe, -$NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest ist, sein können,
wobei $B^1$ im Falle dass $A^5$ = O oder S, $B^2$ im Falle dass $A^6$ = O oder S, $B^3$ im Falle dass $A^7$ = O oder S, $B^4$ im Falle dass $A^{13}$ = O oder S unabhängig voneinander aus der Gruppe bestehend aus

direkte Bindung,

$$\&\text{-}(X^1)_{p1}\text{-}[C{=}X^2]_{p2}\text{-}(X^3)_{p3}\text{-}B^5\text{-}(Y^2)_{q2}\text{-}[C{=}Y^1]_{q1}\text{-}\&\&,$$

$$\&\text{-}(Y^3)_{q3}\text{-}(C{=}Y^4)\text{-}\&\&,$$

ausgewählt sind,
und wobei $B^1$ im Falle dass $A^5$ = direkte Bindung, $B^2$ im Falle dass $A^6$ = direkte Bindung, $B^3$ im Falle dass $A^7$ = direkte Bindung, $B^4$ im Falle dass $A^{13}$ = direkte Bindung unabhängig voneinander aus der Gruppe bestehend aus

$$\&\text{-}(X^4)_{p4}\text{-}[C{=}X^5]_{p5}\text{-}(X^6)_{p6}\text{-}B^6\text{-}(Y^7)_{q6}\text{-}[C{=}Y^6]_{q5}\text{-}(Y^5)_{q4}\text{-}\&\&,$$

$$\&\text{-}(Y^{10})_{q9}\text{-}(C{=}Y^9)_{q8}\text{-}(Y^8)_{q7}\text{-}\&\&,$$

wobei p1, p2, p3 jeweils 0 oder 1 mit der Maßgabe, dass nicht gleichzeitig p1 = p3 = 1 und p2 = 0 ist, sind,
wobei p4, p5, p6 jeweils 0 oder 1 mit der Maßgabe, dass nicht gleichzeitig p4 = p6 = 1 und p5 = 0 ist, sind,
wobei q1, q2 jeweils 0 oder 1 sind, wobei wenn q1 = 0, dann q2 = 0,
wobei q3 = 0 oder 1 ist,
wobei q4, q5, q6 jeweils 0 oder 1 mit der Maßgabe, dass nicht gleichzeitig q4 = q6 = 1 und q5 = 0 ist, sind,
wobei q7, q8, q9 jeweils 0 oder 1 mit der Maßgabe, dass nicht gleichzeitig q7 = q9 = 1 und q8 = 0 ist, und dass wenn q7 = 1 und q8 = 0, dann q9 = 0 ist,
wobei $X^2$, $X^5$, $Y^1$, $Y^4$, $Y^6$, $Y^9$ unabhängig voneinander ausgewählt aus der Gruppe bestehend aus Sauerstoff, Schwefel sind,
wobei $X^1$, $X^3$, $X^4$, $X^6$, $Y^2$, $Y^3$, $Y^7$, $Y^{10}$ unabhängig voneinander ausgewählt aus der Gruppe bestehend aus O, S, NH, N-Alkyl, wobei die Alkylgruppe insbesondere 1 bis 10 Kohlenstoffatome aufweist, sind,
wobei $Y^5$, $Y^8$ aus NH, N-Alkyl, wobei die Alkylgruppe insbesondere 1 bis 10 Kohlenstoffatome aufweist, ausgewählt ist,
wobei $B^5$, $B^6$ unabhängig voneinander ausgewählt aus der Gruppe bestehend aus zweiwertiger (hetero)aromatischer Rest,
zweiwertiger, gegebenenfalls mit mindestens einer Gruppe ausgewählt aus Nitrogruppe,-$NH_2$, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest,
und insbesondere ein zweiwertiger, gegebenenfalls mindestens eine Gruppe ausgewählt aus Ether, Thioether, Aminoether aufweisender aliphatischer Rest sind,

ausgewählt sind,
und wobei "&&" für $B^1$ die zu $A^5$ weisende Bindung bezeichnet, für $B^2$ die zu $A^6$ weisende Bindung bezeichnet, für $B^3$ die zu $A^7$weisende Bindung bezeichnet, für $B^4$ die zu $A^{13}$ weisende Bindung bezeichnet,
und wobei "&" für $B^1$ die zu $R^5$ weisende Bindung bezeichnet, für $B^2$ die zu $R^8$ weisende Bindung bezeichnet, für

$B^3$ die zu $R^{24}$ weisende Bindung bezeichnet, für $B^4$ die zu $R^{12}$ bzw. $R^{14}$ bzw. $R^{16}$ bzw. $R^{18}$ weisende Bindung bezeichnet.

**3.** Polymer nach Anspruch 2, umfassend $n^1$ miteinander verknüpfte Wiederholungseinheiten der chemischen Struktur **(I)** oder $n^2$ miteinander verknüpfte Wiederholungseinheiten der chemischen Struktur **(II)** mit

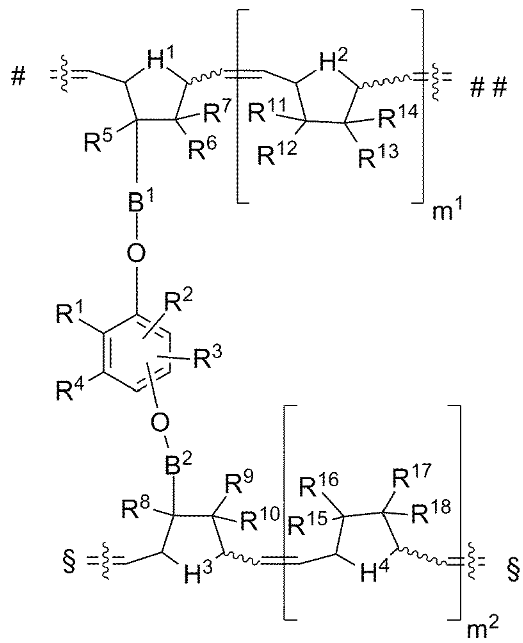

;

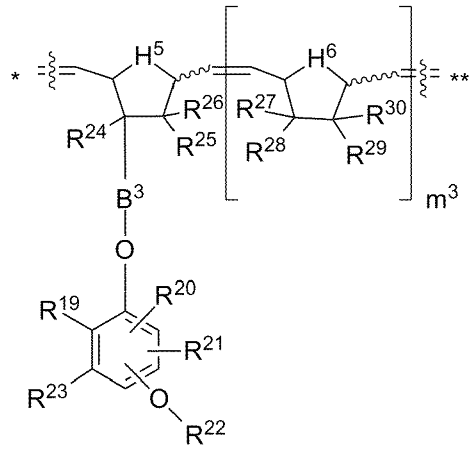

;

**(I)** **(II)**

wobei $n^1$ und $n^2$ unabhängig voneinander jeweils eine ganze Zahl $\geq 4$ und $\leq 5000$ sind,
wobei $m^1$, $m^2$, $m^3$ unabhängig voneinander jeweils eine ganze Zahl $\geq 0$ und $\leq 5000$ sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei $H^1$, $H^2$, $H^3$, $H^4$, $H^5$, $H^6$ unabhängig voneinander ausgewählt sind aus O, $CH_2$,
wobei die Reste $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{21}$, $R^{23}$, $R^{24}$, $R^{25}$, $R^{26}$, $R^{27}$, $R^{28}$, $R^{29}$, $R^{30}$ unabhängig voneinander jeweils aus der Gruppe bestehend aus

Wasserstoff, Alkylgruppe mit 1 bis 30 Kohlenstoffatomen,

ausgewählt sind,
und wobei $R^{22}$ eine Alkylgruppe mit 1 bis 30 Kohlenstoffatomen ist,
und wobei die Reste $R^{11}$, $R^{13}$, $R^{15}$, $R^{17}$ unabhängig voneinander jeweils auch eine Gruppe der allgemeinen Struktur **(III)** mit

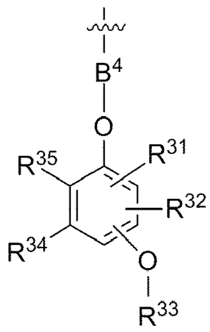

;

**(III)**

wobei die Reste $R^{31}$, $R^{32}$, $R^{34}$, $R^{35}$ unabhängig voneinander jeweils aus der Gruppe bestehend aus Wasserstoff, Alkylgruppe mit 1 bis 30 Kohlenstoffatomen, ausgewählt sind, und wobei $R^{33}$ eine Alkylgruppe mit 1 bis 30 Kohlenstoffatomen ist,

sein können,
und wobei $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{24}$, $R^{25}$, $R^{26}$, $R^{27}$, $R^{28}$, $R^{29}$, $R^{30}$ jeweils auch aus der Gruppe bestehend aus

Nitrogruppe, -CN, -F, -Cl, -Br, -I, -O-$R^{40}$, wobei $R^{40}$ eine Alkylgruppe mit 1 bis 30 Kohlenstoffatomen ist,

ausgewählt sein können,
wobei $B^1$, $B^2$, $B^3$, $B^4$ unabhängig voneinander aus der Gruppe bestehend aus

direkte Bindung,

$$\&\text{-}(X^1)_{p1}\text{-}[C{=}X^2]_{p2}\text{-}(X^3)_{p3}\text{-}B^5\text{-}(Y^2)_{q2}\text{-}[C{=}Y^1]_{q1}\text{-}\&\&,$$

$$\&\text{-}(Y^3)_{q3}\text{-}(C{=}Y^4)\text{ -}\&\&,$$

ausgewählt sind,

wobei p1, p2, p3 jeweils 0 oder 1 mit der Maßgabe, dass nicht gleichzeitig p1 = p3 = 1 und p2 = 0 ist, sind,
wobei q1, q2 jeweils 0 oder 1 sind, wobei wenn q1 = 0, dann q2 = 0,
wobei q3 = 0 oder 1 ist,
wobei $X^2$, $Y^1$, $Y^4$ unabhängig voneinander ausgewählt aus der Gruppe bestehend aus Sauerstoff, Schwefel sind,
wobei $X^1$, $X^3$, $Y^2$, $Y^3$ unabhängig voneinander ausgewählt aus der Gruppe bestehend aus O, S sind,
und wobei $B^5$ ausgewählt aus der Gruppe bestehend aus &-Phenylen-$CH_2$-&&, ein zweiwertiger, gegebenenfalls mindestens eine Gruppe ausgewählt aus Ether, Thioether, Aminoether aufweisender aliphatischer Rest ist.

**4.** Polymer nach Anspruch 3, umfassend $n^1$ miteinander verknüpfte Wiederholungseinheiten der chemischen Struktur **(I)** oder $n^2$ miteinander verknüpfte Wiederholungseinheiten der chemischen Struktur **(II)** mit

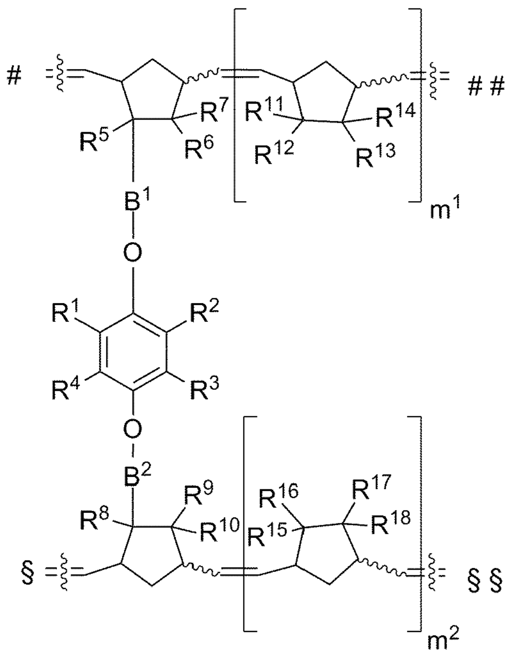

;

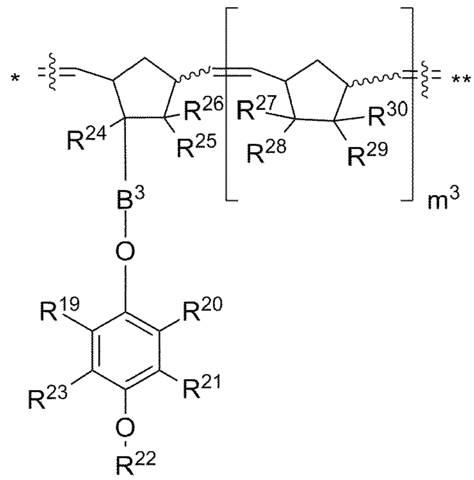

;

**(I)** **(II)**

wobei $n^1$ und $n^2$ unabhängig voneinander jeweils eine ganze Zahl ≥ 10 und ≤ 1000, sind,
wobei $m^1$, $m^2$, $m^3$ unabhängig voneinander jeweils eine ganze Zahl ≥ 0 und ≤ 1000, sind,
wobei die Wiederholungseinheiten der chemischen Struktur (I) innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei die Reste $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{21}$, $R^{23}$, $R^{24}$, $R^{25}$, $R^{26}$, $R^{27}$, $R^{28}$, $R^{29}$, $R^{30}$ unabhängig voneinander jeweils aus der Gruppe bestehend aus Wasserstoff, Alkylgruppe mit 1 bis 8 Kohlenstoffatomen ausgewählt sind,
und wobei $R^{22}$ eine Alkylgruppe mit 1 bis 8 Kohlenstoffatomen ist,
und wobei die Reste $R^{11}$, $R^{13}$, $R^{15}$, $R^{17}$ unabhängig voneinander jeweils auch eine Gruppe der allgemeinen Struktur **(III)** mit

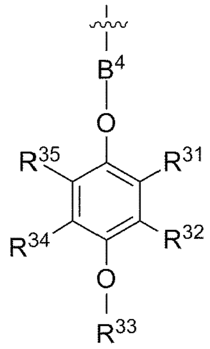

;

**(III)**

wobei die Reste $R^{31}$, $R^{32}$, $R^{34}$, $R^{35}$ unabhängig voneinander jeweils aus der Gruppe bestehend aus Wasserstoff, Alkylgruppe mit 1 bis 8 Kohlenstoffatomen ausgewählt sind,
und wobei $R^{33}$ eine Alkylgruppe mit 1 bis 8 Kohlenstoffatomen ist,
sein können,
und wobei $R^5$, $R^6$, $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{24}$, $R^{25}$, $R^{26}$, $R^{27}$, $R^{28}$, $R^{29}$, $R^{30}$ jeweils auch aus der Gruppe bestehend aus

Nitrogruppe, -CN, -F, -Cl, -Br, -I, -O-$R^{40}$, wobei $R^{40}$ eine Alkylgruppe mit 1 bis 8 Kohlenstoffatomen ist,

ausgewählt sein können,
wobei $B^1$, $B^2$, $B^3$, $B^4$ unabhängig voneinander aus der Gruppe bestehend aus

direkte Bindung,

$$\&\text{-}(O)_{p1}\text{-}[C{=}O]_{p2}\text{-}(O)_{p3}\text{-}B^5\text{-}\&\&,$$

ausgewählt sind,

wobei p1, p2, p3 jeweils 0 oder 1 mit der Maßgabe, dass nicht gleichzeitig p1 = p3 = 1 und p2 = 0 ist, sind, $B^5$ = Alkylengruppe mit 1 bis 30 Kohlenstoffatomen ist.

**5.** Polymer nach Anspruch 4,
wobei $R^1 = R^3$, $R^2 = R^4$, $R^{19} = R^{21}$, $R^{20} = R^{23}$, $R^{31} = R^{34}$, $R^{32} = R^{35}$.

**6.** Polymer nach Anspruch 5, wobei $R^1 = R^3$ = H, $R^2 = R^4$ = Alkylgruppe mit 1 bis 8 Kohlenstoffatomen, $R^{19} = R^{21}$ = H, $R^{20} = R^{23}$= Alkylgruppe mit 1 bis 8 Kohlenstoffatomen, $R^{31} = R^{34}$ = H, $R^{32} = R^{35}$= Alkylgruppe mit 1 bis 8 Kohlenstoffatomen und $B^1$, $B^2$, $B^3$, $B^4$ unabhängig voneinander jeweils aus der Gruppe bestehend aus direkte Bindung, &-[(C=O)-O-]$_r$-$B^5$-&&, wobei r = 0 oder 1 und wobei $B^5$ = Methylen, Ethylen, *n*-Propylen, *n*-Butylen, *n*-Pentylen, *n*-Hexylen oder Phenylen ist.

**7.** Polymer nach Anspruch 6, wobei $R^1 = R^3$ = H, $R^2 = R^4$ = Alkylgruppe mit 1 bis 6 Kohlenstoffatomen, $R^{19} = R^{21}$ = H, $R^{20} = R^{23}$ = Alkylgruppe mit 1 bis 6 Kohlenstoffatomen, $R^{31} = R^{34}$ = H, $R^{32} = R^{35}$= Alkylgruppe mit 1 bis 6 Kohlenstoffatomen.

**8.** Polymer nach Anspruch 7, wobei $R^1 = R^3$ = H, $R^2 = R^4$ = *tert*-Butylgruppe, $R^{19} = R^{21}$ = H, $R^{20}$, = $R^{23}$= *tert*-Butylgruppe, $R^{31} = R^{34}$ = H, $R^{32} = R^{35}$= *tert*-Butylgruppe.

**9.** Verwendung der Polymere nach einem der Ansprüche 1 bis 8 als redoxaktives Elektrodenmaterial für elektrische Ladungsspeicher.

**10.** Verwendung der Polymere nach einem der Ansprüche 1 bis 8 in einem Elektrodenslurry für elektrische Ladungsspeicher.

Fig. 1

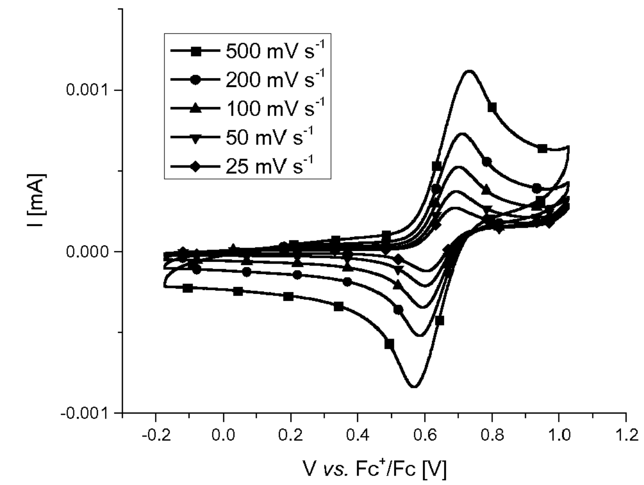
500 mV s-1
200 mV s-1
100 mV s-1
50 mV s-1
25 mV s-1
I [mA]
0.001
0.000
-0.001
-0.2
0.0
0.2
0.4
0.6
0.8
1.0
1.2
V vs. Fc+/Fc [V]

Fig. 2

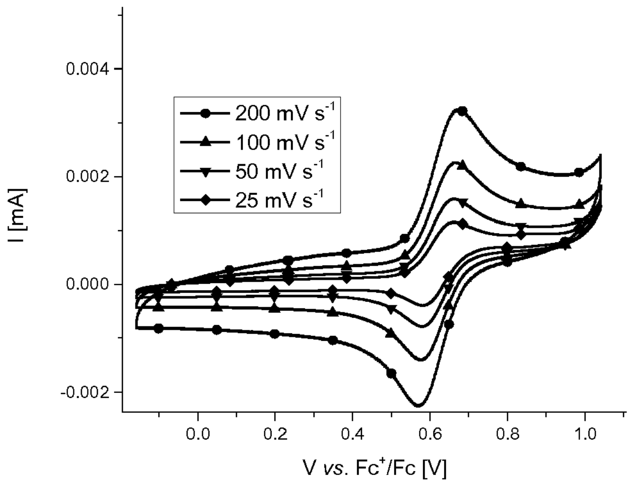
200 mV s-1
100 mV s-1
50 mV s-1
25 mV s-1
I [mA]
0.004
0.002
0.000
-0.002
0.0
0.2
0.4
0.6
0.8
1.0
V vs. Fc+/Fc [V]

Fig. 3

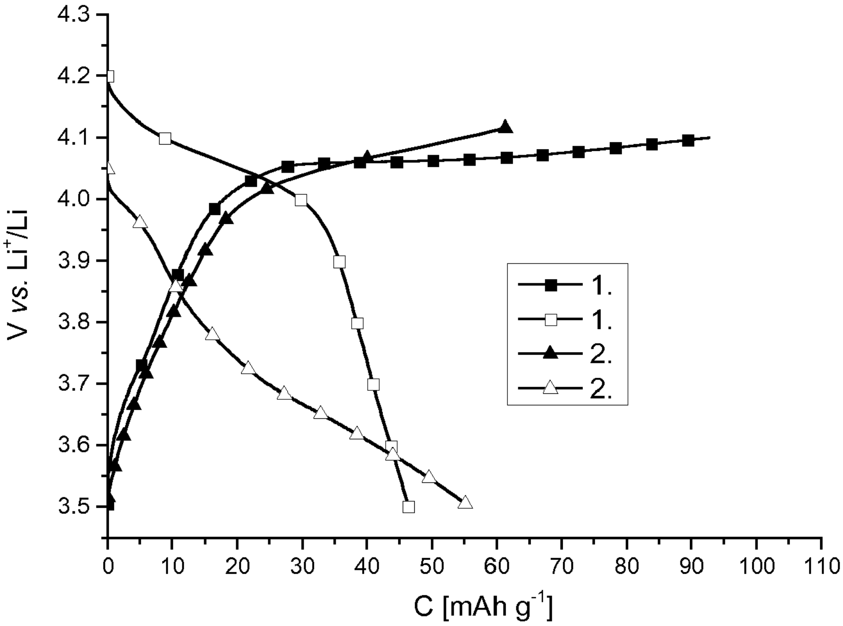


Fig. 4

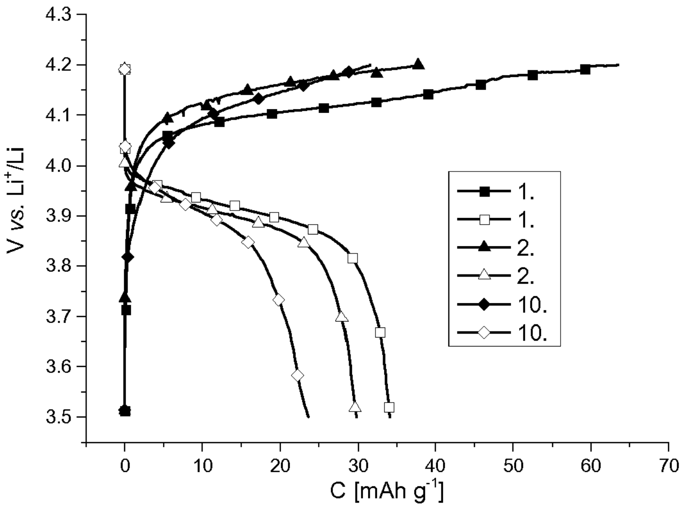

Fig. 5

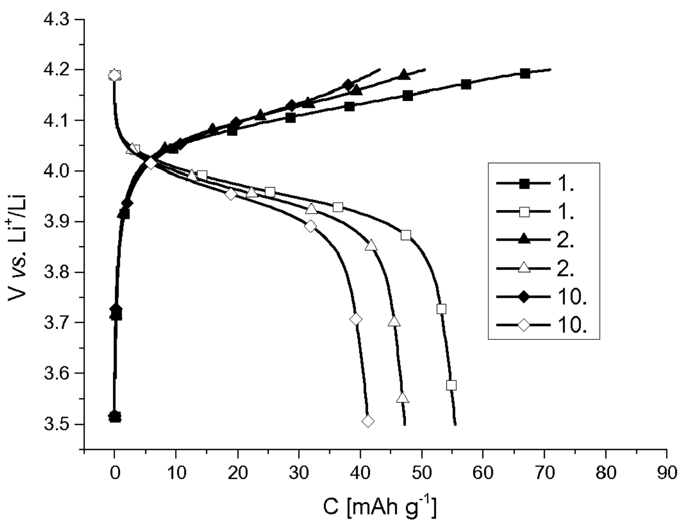
4.3
4.2
4.1
4.0
3.9
3.8
3.7
3.6
3.5
V vs. Li+/Li
0
10
20
30
40
50
60
70
80
90
C [mAh g-1]
1.
1.
2.
2.
10.
10.

Europäisches Patentamt
European Patent Office
Office européen des brevets

# EUROPÄISCHER RECHERCHENBERICHT

Nummer der Anmeldung
EP 15 18 2454

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | JP 2011 252106 A (NEC CORP; UNIV WASEDA; SUMITOMO SEIKA CHEMICALS) 15. Dezember 2011 (2011-12-15) * Zusammenfassung * ----- | 1-10 | INV. C08G59/24 C08G65/22 H01G11/48 H01M4/60 C08G61/08 |
| A,D | PETER NESVADBA ET AL: "Synthesis of a polymeric 2,5-di--butyl-1,4-dialkoxybenzene and its evaluation as a novel cathode material", SYNTHETIC METALS, ELSEVIER SEQUOIA, LAUSANNE, CH, Bd. 161, Nr. 3, 18. November 2010 (2010-11-18), Seiten 259-262, XP028151505, ISSN: 0379-6779, DOI: 10.1016/J.SYNTHMET.2010.11.030 [gefunden am 2010-11-29] * Scheme 2; Seite 260 * ----- | 1-10 | |
| A,D | WEI WENG ET AL: "Smart Polymeric Cathode Material with Intrinsic Overcharge Protection Based on a 2,5-Di-tert-butyl-1,4-dimethoxybenzene Core Structure", ADVANCED FUNCTIONAL MATERIALS, WILEY - V C H VERLAG GMBH & CO. KGAA, DE, Bd. 22, Nr. 21, 7. November 2012 (2012-11-07), Seiten 4485-4492, XP001581908, ISSN: 1616-301X, DOI: DOI: 10.1002/ADFM.201200458 [gefunden am 2012-06-25] * Abbildung 3 * ----- | 1-10 | RECHERCHIERTE SACHGEBIETE (IPC): C08G H01M H01G |
| A,D | EP 1 128 453 A2 (NEC CORP [JP]) 29. August 2001 (2001-08-29) * Seite 32; Beispiel 13 * ----- | 1-10 | |
| | -/-- | | |

Der vorliegende Recherchenbericht wurde für alle Patentansprüche erstellt

1

| Recherchenort | Abschlußdatum der Recherche | Prüfer |
|---|---|---|
| Den Haag | 4. Februar 2016 | O'Sullivan, Timothy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 15 18 2454

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2014/048786 A1 (SUZUKA MICHIO [JP] ET AL) 20. Februar 2014 (2014-02-20)<br>* Ansprüche 1-17 *<br>* Absatz [0191] *<br>----- | 1-10 | |
| A | GB 1 454 336 A (SHOWA DENKO KK) 3. November 1976 (1976-11-03)<br>* Anspruch 1; Beispiel 1 *<br>----- | 1-10 | |
| | | | RECHERCHIERTE SACHGEBIETE (IPC) |

Der vorliegende Recherchenbericht wurde für alle Patentansprüche erstellt

1

| Recherchenort | Abschlußdatum der Recherche | Prüfer |
|---|---|---|
| Den Haag | 4. Februar 2016 | O'Sullivan, Timothy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 15 18 2454

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-02-2016

| Im Recherchenbericht angeführtes Patentdokument | Datum der Veröffentlichung | Mitglied(er) der Patentfamilie | Datum der Veröffentlichung |
|---|---|---|---|
| JP 2011252106 A | 15-12-2011 | JP 5625151 B2 | 19-11-2014 |
| | | JP 2011252106 A | 15-12-2011 |
| EP 1128453 A2 | 29-08-2001 | CA 2337590 A1 | 25-08-2001 |
| | | CN 1310485 A | 29-08-2001 |
| | | DE 60123145 T2 | 13-09-2007 |
| | | EP 1128453 A2 | 29-08-2001 |
| | | EP 1722430 A1 | 15-11-2006 |
| | | EP 1722431 A2 | 15-11-2006 |
| | | JP 3687736 B2 | 24-08-2005 |
| | | JP 2002151084 A | 24-05-2002 |
| | | KR 20010085578 A | 07-09-2001 |
| | | TW 531917 B | 11-05-2003 |
| | | US 2003096165 A1 | 22-05-2003 |
| | | US 2005170247 A1 | 04-08-2005 |
| US 2014048786 A1 | 20-02-2014 | CN 103477407 A | 25-12-2013 |
| | | DE 112012001084 T5 | 30-04-2014 |
| | | JP 2013152921 A | 08-08-2013 |
| | | US 2014048786 A1 | 20-02-2014 |
| | | WO 2013099567 A1 | 04-07-2013 |
| GB 1454336 A | 03-11-1976 | DE 2414840 A1 | 24-04-1975 |
| | | FR 2257646 A1 | 08-08-1975 |
| | | GB 1454336 A | 03-11-1976 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2012133202 A1
- WO 2012133204 A1
- WO 2012120929 A1
- WO 2012153866 A1
- WO 2012153865 A1
- JP 2012221574 A
- JP 2012221575 A
- JP 2012219109 A
- JP 2012079639 A
- WO 2012029556 A1
- JP 2011252106 A
- JP 2011074317 A
- JP 2011165433 A
- WO 2011034117 A1
- WO 2010140512 A1
- WO 2010104002 A1
- JP 2010238403 A
- JP 2010163551 A
- JP 2010114042 A
- WO 2010002002 A1
- WO 2009038125 A1
- JP 2009298873 A
- WO 2004077593 A1
- WO 2009145225 A1
- JP 2009238612 A
- JP 2009230951 A
- JP 2009205918 A
- JP 2008234909 A
- JP 2008218326 A
- WO 2008099557 A1
- WO 2007141913 A1
- US 20020041995 A1
- EP 1128453 A2
- JP 2002117852 A
- JP 2009217992 A
- WO 2013099567 A1
- WO 2011068217 A1
- JP 2010212152 A
- JP 2012190545 A
- JP 2010055923 A
- JP 2013098217 A
- JP 2012224758 A
- JP 2011231153 A
- JP 2011138037 A
- JP 2010282154 A
- JP 2010266556 A
- JP 2010077303 A
- JP 2008296436 A
- WO 2004098745 A1
- WO 2011149970 A2


### In der Beschreibung aufgeführte Nicht-Patentliteratur


- **A. VLAD ; J. ROLLAND ; G. HAUFFMAN ; B. ERNOULD ; J.-F. GOHY.** *ChemSusChem,* 2015, vol. 8, 1692-1696
- **P. NESVADBA ; L. B. FOLGER ; P. MAIRE ; P. NOVAK.** *Synth. Met.,* 2011, vol. 161, 259-262
- **W. WENG ; Z. C. ZHANG ; A. ABOUIMRANE ; P. C. REDFERN ; L. A. CURTISS ; K. AMINE.** *Adv. Funct. Mater.,* 2012, vol. 22, 4485-4492